# EUROPEAN PATENT APPLICATION

(11) **EP 4 270 230 A1**
(43) Date of publication of application: **01.11.2023**
(21) Application number: 22758744.1
(22) Date of filing: 27.01.2022
(51) Int. Cl.: G06F 21/60

(54) **ACCESS CONTROL METHOD, ELECTRONIC DEVICE AND SYSTEM**

(30) Priority: 24.02.2021 CN 202110206259; 29.06.2021 CN 202110730286
(71) Applicant: Huawei Technologies Co., Ltd., Shenzhen, Guangdong 518129 (CN)
(72) Inventor: MAO, Zhewen, Shenzhen, Guangdong 518129 (CN); REN, Bingfei, Shenzhen, Guangdong 518129 (CN)
(74) Representative: Gill Jennings & Every LLP
(86) International application number: PCT/CN2022/074252
(87) International publication number: WO 2022/179379

(57) **Abstract**

This application discloses an access control method, an electronic device, and a system, so as to run different instances when a callee provides services for different callers, and keep isolation between memory data of the different instances. This resolves a problem that memory data of each caller is abused, misused, or leaked, and ensures data security.

## Description

This application claims priority to Chinese Patent Application No. 202110206259.1, filed with the China National Intellectual Property Administration on February 24, 2021 and entitled "ACCESS CONTROL METHOD, ELECTRONIC DEVICE, AND SYSTEM", and to Chinese Patent Application No. 202110730286.9, filed with the China National Intellectual Property Administration on June 29, 2021 and entitled "ACCESS CONTROL METHOD, ELECTRONIC DEVICE, AND SYSTEM", which are incorporated herein by reference in their entireties.

### TECHNICAL FIELD

This application relates to the field of computer technologies, and in particular, to an access control method, an electronic device, and a system.

### BACKGROUND

An application (application, APP) in a terminal operating system (operating system, OS) may apply to a user for access authorization of a sensitive resource in a form of an independent subject, and may provide a corresponding service for the user after the authorization is given by the user. When one APP calls a service of another APP, the called APP may provide the service for the calling APP in a form of a third-party library. In this case, because the third-party library is integrated into the calling APP, the third-party library can use various permissions owned by the calling APP. Consequently, there is a problem that the third-party library abuses a resource owned by the calling APP, and data security of the calling APP cannot be ensured.

### SUMMARY

This application provides an access control method, a related electronic device, and a related system, so as to run different instances when a callee provides services for different callers, and keep isolation between memory data of the different instances. This resolves a problem that memory data of each caller is abused, misused, or leaked, and ensures data security.

The foregoing objective and other objectives are achieved by using features in the independent claims. Further implementations are embodied in the dependent claims, the specification, and the accompanying drawings.

According to a first aspect, an embodiment of this application provides an access control method. The method is applied to a communications system, and the communications system includes a first device, a second device, and a third device. A first caller is installed in the first device, a callee is installed in the second device, and a second caller is installed in the third device. The first caller, the callee, and the second caller each are an application APP or a function component, the application is a program entity implementing a plurality of functions, and the function component is a program entity implementing a single function.

The method may include: The first device sends a first request to the second device, where the first request carries indication information of the first caller, the callee, and a first service. The second device runs a first instance in response to the first request, where the first instance is an instance of the callee, and the first instance is configured to provide the first service for the first caller.

The third device sends a second request to the second device, where the second request carries indication information of the second caller, the callee, and a second service. The second device runs a second instance in response to the second request, where the second instance is an instance of the callee, the second instance is configured to provide the second service for the second caller, and the second instance is different from the first instance.

According to the method in the first aspect, the callee may run different instances when providing services for different callers. For example, the callee on the second device may run the first instance to provide the first service for the first caller on the first device, and the callee on the second device may run the second instance to provide the second service for the second caller on the third device. Memory data of the different instances is kept isolated. This can effectively reduce risks such as abuse, confusion, misuse, or leakage of memory data of the callers, and ensures data security.

With reference to the first aspect, in some embodiments, the method may further include: The first device sends a third request to the second device, where the third request carries indication information of the first caller, the callee, and a third service. The second device runs the first instance in response to the third request, where the first instance is further configured to provide the third service for the first caller. To be specific, the first device sends another third request to the second device again, where the third request is used by the first caller to request the callee to provide the third service. For the same caller on the same device, the second device still runs the same instance, that is, the third service is provided by using the first instance.

With reference to the first aspect, in some embodiments, the method further includes: The first device sends a fourth request to the second device, where the fourth request carries indication information of a third caller, the callee, and a fourth service, the third caller is installed in the first device, and the third caller is an application or a function component. The second device runs the first instance in response to the fourth request, where the first instance is further configured to provide the fourth service for the third caller. That is, different callers on the same device may share the same instance. In this embodiment, both the third caller and the first caller on the first device may call the first instance.

With reference to the first aspect, in some embodiments, the method further includes: A fourth device sends a fifth request to the second device, where the fifth request carries indication information of the first caller, the callee, and a fifth service, and the first caller is installed in the fourth device. The second device runs the first instance in response to the fifth request, where the first instance is further configured to provide the fifth service for the first caller in the fourth device. That is, the same caller on different devices may share the same instance. In this embodiment, both the first caller on the first device and the first caller on the fourth device may call the first instance.

With reference to the first aspect, in some embodiments, the first caller is the same as the second caller. That is, the same caller on different devices may call different instances. In this embodiment, the first caller of the first device may call the first instance, and the first caller of the second device may call the second instance. The first instance is different from the second instance.

With reference to the first aspect, in some embodiments, the first device is the same as the third device. That is, different callers on the same device may call different instances. In this embodiment, the first caller of the first device may call the first instance, and the second caller of the first device may call the second instance. The first instance is different from the second instance.

With reference to the first aspect, in some embodiments, before the second device runs the first instance, the method further includes: The second device detects whether the first instance exists, and if the first instance does not exist, the second device creates the first instance.

With reference to the first aspect, in some embodiments, the method further includes: The second device allocates a first process identifier PID to the first instance, and allocates a second PID to the second instance, or the second device allocates a first user identifier UID to the first instance, and allocates a second UID to the second instance.

With reference to the first aspect, in some embodiments, the method further includes: The second device records a first calling relationship, where the first calling relationship includes information about the first caller, information about the first instance, an identifier of the first calling relationship, and the like. The information about the first caller includes an application identifier of the first caller. The information about the first instance includes an application identifier of the callee, the first PID, and the first UID. The information about the first caller further includes one or more of the following: a user identifier UID of the first caller, a developer signature of the first caller, an account identifier of the first device in which the first caller is located, an identifier of the first device, and an identifier of a communications system in which the first caller is located. The information about the first instance further includes one or more of the following: a user identifier UID of the callee, a developer signature of the callee, an account identifier of the second device in which the callee is located, an identifier of the second device, and an identifier of a communications system in which the callee is located.

With reference to the first aspect, in some embodiments, the method further includes: The first device records a first calling relationship, where the first calling relationship includes information about the first caller, information about the callee, an identifier of the first calling relationship, and the like. The information about the first caller includes an application identifier of the first caller, and the information about the callee includes an application identifier of the callee. The information about the first caller further includes one or more of the following: a user identifier UID of the first caller, a developer signature of the first caller, an account identifier of the first device in which the first caller is located, an identifier of the first device, and an identifier of a communications system in which the first caller is located. The information about the callee further includes one or more of the following: the first PID, the first UID, a user identifier UID of the callee, a developer signature of the callee, an account identifier of the second device in which the callee is located, an identifier of the second device, and an identifier of a communications system in which the callee is located.

With reference to the first aspect, in some embodiments, after the second device runs the first instance, the method further includes: The second device generates a first result, the second device returns the first result to the first device, and the first device runs the first caller to process the first result.

With reference to the first aspect, in some embodiments, the method further includes: The second device confirms that the first caller has permission to access the callee. The second device may confirm the permission before the second device runs the instance.

With reference to the first aspect, in some embodiments, the method further includes: The second device confirms that the first caller has permission to access the first service. The second device may confirm the permission before the second device runs the instance.

With reference to the first aspect, in some embodiments, the method further includes: The first device confirms that the first caller has permission to access the callee. The first device may confirm the permission before the first device sends the first request to the second device.

With reference to the first aspect, in some embodiments, the method further includes: The first device confirms that the first caller has permission to access the first service. The first device may confirm the permission before the first device sends the first request to the second device.

According to a second aspect, an embodiment of this application provides an access control method, applied to a second device. The method may include: The second device receives a first request of a first device, where a first caller is installed in the first device, a callee is installed in the second device, and the first request carries indication information of the first caller, the callee, and a first service. The second device runs a first instance in response to the first request, where the first instance is an instance of the callee, and the first instance is configured to provide the first service for the first caller.

The second device receives a second request of a third device, where a second caller is installed in the third device, and the second request carries indication information of the second caller, the callee, and a second service. The second device runs a second instance in response to the second request, where the second instance is an instance of the callee, the second instance is configured to provide the second service for the second caller, and the second instance is different from the first instance. The first caller, the callee, and the second caller each are an application or a function component, the application is a program entity implementing a plurality of functions, and the function component is a program entity implementing a single function.

According to the method in the second aspect, the callee may run different instances when providing services for different callers. For example, the callee on the second device may run the first instance to provide the first service for the first caller on the first device, and the callee on the second device may run the second instance to provide the second service for the second caller on the third device. Memory data of the different instances is kept isolated. This can effectively reduce risks such as abuse, confusion, misuse, or leakage of memory data of the callers, and ensures data security.

With reference to the second aspect, in some embodiments, the method further includes: The second device receives a third request of the first device, where the third request carries indication information of the first caller, the callee, and the third service. The second device runs the first instance in response to the third request, where the first instance is further configured to provide the third service for the first caller. To be specific, the first device sends another third request to the second device again, where the third request is used by the first caller to request the callee to provide the third service. For the same caller on the same device, the second device still runs the same instance, that is, the third service is provided by using the first instance.

With reference to the second aspect, in some embodiments, the method further includes: The second device receives a fourth request of the first device, where the fourth request carries indication information of a third caller, the callee, and a fourth service, the third caller is installed in the first device, and the third caller is an application or a function component. The second device runs the first instance in response to the fourth request, where the first instance is further configured to provide the fourth service for the third caller. That is, different callers on the same device may share the same instance. In this embodiment, both the third caller and the first caller on the first device may call the first instance.

With reference to the second aspect, in some embodiments, the method further includes: The second device receives a fifth request of a fourth device, where the fifth request carries indication information of the first caller, the callee, and a fifth service, and the first caller is installed in the fourth device. The second device runs the first instance in response to the fifth request, where the first instance is further configured to provide the fifth service for the first caller in the fourth device. That is, the same caller on different devices may share the same instance. In this embodiment, both the first caller on the first device and the first caller on the fourth device may call the first instance.

With reference to the second aspect, in some embodiments, the first caller is the same as the second caller. That is, the same caller on different devices may call different instances. In this embodiment, the first caller of the first device may call the first instance, and the first caller of the second device may call the second instance. The first instance is different from the second instance.

With reference to the second aspect, in some embodiments, the first device is the same as the third device. That is, different callers on the same device may call different instances. In this embodiment, the first caller of the first device may call the first instance, and the second caller of the first device may call the second instance. The first instance is different from the second instance.

With reference to the second aspect, in some embodiments, before the second device runs the first instance, the method further includes: The second device detects whether the first instance exists, and if the first instance does not exist, the second device creates the first instance.

With reference to the second aspect, in some embodiments, the method further includes: The second device allocates a first process identifier PID to the first instance, and allocates a second PID to the second instance, or the second device allocates a first user identifier UID to the first instance, and allocates a second UID to the second instance.

With reference to the second aspect, in some embodiments, the method further includes: The second device records a first calling relationship, where the first calling relationship may include information about the first caller, information about the first instance, an identifier of the first calling relationship, and the like. The information about the first caller includes an application identifier of the first caller. The information about the first instance includes an application identifier of the callee, the first PID, and the first UID. The information about the first caller further includes one or more of the following: a user identifier UID of the first caller, a developer signature of the first caller, an account identifier of the first device in which the first caller is located, an identifier of the first device, and an identifier of a communications system in which the first caller is located. The information about the first instance further includes one or more of the following: a user identifier UID of the callee, a developer signature of the callee, an account identifier of the second device in which the callee is located, an identifier of the second device, and an identifier of a communications system in which the callee is located.

With reference to the second aspect, in some embodiments, after the second device runs the first instance, the method further includes: The second device generates a first result, and the second device returns the first result to the first device.

With reference to the second aspect, in some embodiments, the method further includes: The second device confirms that the first caller has permission to access the callee. The second device may confirm the permission before the second device runs the instance.

With reference to the second aspect, in some embodiments, the method further includes: The second device confirms that the first caller has permission to access the first service. The second device may confirm the permission before the second device runs the instance.

According to a third aspect, an embodiment of this application provides an access control method, applied to a first device. A first caller, a callee, and a second caller are installed in the first device. The first caller, the callee, and the second caller each are an application APP or a function component, the application is a program entity implementing a plurality of functions, and the function component is a program entity implementing a single function.

The method may include: The first device initiates a first calling request, where the first calling request carries indication information of the first caller, the callee, and a first service. The first device runs a first instance in response to the first calling request, where the first instance is an instance of the callee, and the first instance is configured to provide the first service for the first caller.

The first device initiates a second calling request, where the second calling request carries indication information of the second caller, the callee, and a second service. The first device runs a second instance in response to the second calling request, where the second instance is an instance of the callee, the second instance is configured to provide the second service for the second caller, and the second instance is different from the first instance.

According to the method in the third aspect, the callee on the same device may run different instances when providing services for different callers. For example, the callee on the first device may run the first instance to provide the first service for the first caller, and the callee may further run the second instance to provide the second service for the second caller. Memory data of the different instances is kept isolated. This can effectively reduce risks such as abuse, confusion, misuse, or leakage of memory data of the callers, and ensures data security.

With reference to the third aspect, in some embodiments, the method may further include: The first device initiates a third calling request, where the third calling request carries indication information of the first caller, the callee, and a third service. The first device runs the first instance in response to the third calling request, where the first instance is further configured to provide the third service for the first caller. To be specific, the first device initiates another third calling request again, where the third calling request is used by the first caller to request the callee to provide the third service. For different service requests of the same caller, the first device still runs the same instance, that is, the third service is provided by using the first instance.

With reference to the third aspect, in some embodiments, the method further includes: The first device initiates a fourth calling request, where the fourth calling request carries indication information of a third caller, the callee, and a fourth service, the third caller is installed in the first device, and the third caller is an application or a function component. The first device runs the first instance in response to the fourth calling request, where the first instance is further configured to provide the fourth service for the third caller. That is, different callers on the same device may share the same instance. In this embodiment, both the third caller and the first caller on the first device may call the first instance.

With reference to the third aspect, in some embodiments, before the running, by the first device, the first instance, the method further includes: The first device detects whether the first instance exists, and if the first instance does not exist, the first device creates the first instance.

With reference to the third aspect, in some embodiments, the method further includes: The first device allocates a first process identifier PID to the first instance, and allocates a second PID to the second instance, or the first device allocates a first user identifier UID to the first instance, and allocates a second UID to the second instance.

With reference to the third aspect, in some embodiments, the method further includes: The first device records a first calling relationship, where the first calling relationship includes information about the first caller, information about the first instance, an identifier of the first calling relationship, and the like. The information about the first caller includes an application identifier of the first caller. The information about the first instance includes an application identifier of the callee, the first PID, and the first UID. The information about the first caller further includes one or more of the following: a user identifier UID of the first caller, a developer signature of the first caller, an account identifier of the first device in which the first caller is located, an identifier of the first device, and an identifier of a communications system in which the first caller is located. The information about the first instance further includes one or more of the following: a user identifier UID of the callee, a developer signature of the callee, an account identifier of the first device in which the callee is located, an identifier of the first device, and an identifier of a communications system in which the callee is located.

With reference to the third aspect, in some embodiments, after the first device runs the first instance, the method further includes: The first device generates a first result, and the first device runs the first caller to process the first result.

With reference to the third aspect, in some embodiments, the method further includes: The first device confirms that the first caller has permission to access the callee.

With reference to the third aspect, in some embodiments, the method further includes: The first device confirms that the first caller has permission to access the first service.

According to a fourth aspect, an embodiment of this application provides an electronic device. The electronic device may include a communications apparatus, a memory, a processor coupled to the memory, a plurality of applications, and one or more programs. The memory stores computer-executable instructions. When the processor executes the instructions, the electronic device is enabled to implement any function of the second device in the second aspect.

According to a fifth aspect, an embodiment of this application provides an electronic device. The electronic device may include a communications apparatus, a memory, a processor coupled to the memory, a plurality of applications, and one or more programs. The memory stores computer-executable instructions. When the processor executes the instructions, the electronic device is enabled to implement any function of the first device in the third aspect.

According to a sixth aspect, an embodiment of this application provides a communications system. The communications system may include the first device, the second device, the third device, and the like described in the foregoing aspects. It may be understood that, based on a same inventive idea, for steps performed by the first device, the second device, and the third device in the communications system in the sixth aspect, refer to steps performed by the first device, the second device, and the third device in the method in the first aspect when implementing corresponding functions, or for steps performed by the second device, refer to steps performed by the second device in the method in the second aspect when implementing a corresponding function. Details are not described herein again.

According to a seventh aspect, an embodiment of this application provides a computer storage medium. The storage medium stores a computer program, and the computer program includes executable instructions. When the executable instructions are executed by a processor, the processor is enabled to perform an operation corresponding to the method provided in the second aspect or the third aspect.

According to an eighth aspect, an embodiment of this application provides a computer program product. When the computer program product runs on an electronic device, the electronic device is enabled to perform any possible implementation of the second aspect or any possible implementation of the third aspect.

According to a ninth aspect, an embodiment of this application provides a chip system. The chip system may be applied to an electronic device, the chip includes one or more processors, and the processor is configured to call computer instructions, to enable the electronic device to implement any possible implementation of the second aspect or any possible implementation of the third aspect.

According to the foregoing method provided in this application, a same callee may enable a plurality of instances, and provide services for different callers by using different instances. Due to a natural isolation attribute between the instances, the different instances cannot access memory data of each other. In this way, a system-level memory data security mechanism can be provided. This avoids abuse, misuse, and leakage of the memory data of the callers, and ensures data security.

### BRIEF DESCRIPTION OF DRAWINGS

FIG. 1 is a schematic diagram of a communications system according to an embodiment of this application;
FIG. 2 is a schematic diagram of an application scenario according to an embodiment of this application;
FIG. 3 is a schematic diagram of a hardware structure of an electronic device according to an embodiment of this application;
FIG. 4 is a schematic diagram of a service scenario according to an embodiment of this application;
FIG. 5(1) and FIG. 5(2) are a schematic diagram of a solution in the conventional technology;
FIG. 6 is a schematic diagram of a software architecture according to an embodiment of this application;
FIG. 7 is a schematic diagram of an access control model according to an embodiment of this application;
FIG. 8 is a flowchart of an access control method according to an embodiment of this application; and
FIG. 9 is a flowchart of another access control method according to an embodiment of this application.

### DESCRIPTION OF EMBODIMENTS

The technical solutions according to embodiments of this application are clearly and completely described in the following with reference to the accompanying drawings. In descriptions of the embodiments of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists.

The following terms "first" and "second" are merely intended for a purpose of description, and shall not be understood as an indication or implication of relative importance or implicit indication of a quantity of indicated technical features. Therefore, features defined by "first" or "second" may explicitly or implicitly include one or more of the features. In addition, in the descriptions of the embodiments of this application, "a plurality of" means two or more.

A term "user interface (user interface, UI)" in the following embodiments of this application is a medium interface for interaction and information exchange between an application or an operating system and a user, and implements conversion between an internal form of information and a form that can be accepted by the user. The user interface is source code written in a specific computer language such as Java or an extensible markup language (extensible markup language, XML). Interface source code is parsed and rendered on an electronic device, and is finally presented as content that can be identified by the user. The user interface is usually represented in a form of a graphical user interface (graphical user interface, GUI), and is a user interface that is related to a computer operation and that is displayed in a graphic manner. The user interface may be a visual interface element such as a text, an icon, a button, a menu, a tab, a text box, a dialog box, a status bar, a navigation bar, or a Widget that is displayed on a display of the electronic device.

First, a communications system provided in the embodiments of this application is first described.

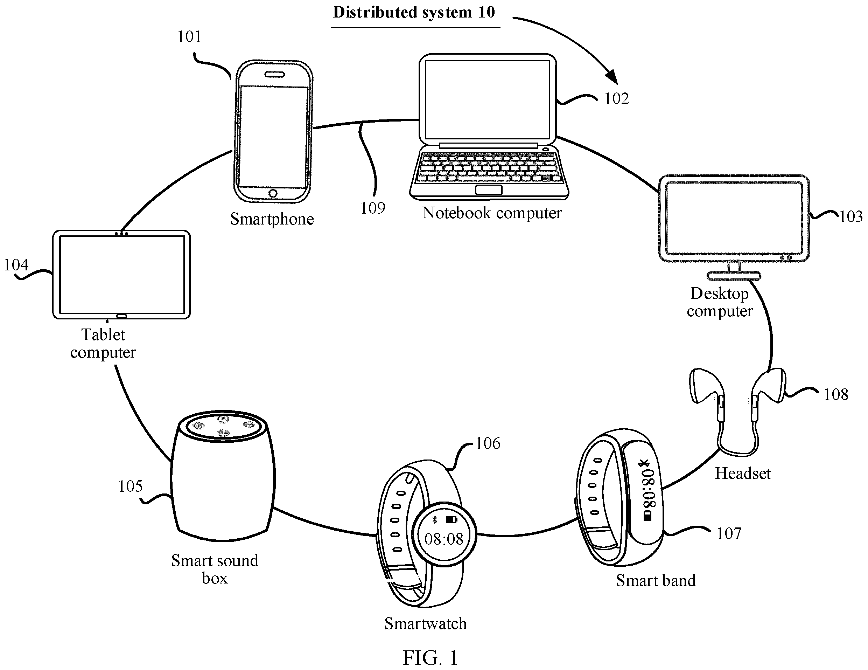

FIG. 1 shows a communications system 10 according to an embodiment of this application, which may also be referred to as a **distributed system 10**.

The distributed system 10 may include a plurality of intelligent terminal devices, and a communications connection 109 is established between the plurality of terminal devices. For example, as shown in FIG. 1, the terminal device may be a smartphone 101, a notebook computer 102, a desktop computer 103, a tablet computer 104, a smart sound box 105, a smartwatch 106, a smart band 107, a headset 108, or an electronic device of another type. For example, the terminal device may further include a desktop computer, a laptop computer, a handheld computer, an augmented reality (augmented reality, AR) device, a virtual reality (virtual reality, VR) device, an artificial intelligence (artificial intelligence, AI) device, a smart screen, an in-vehicle infotainment, a game console, another intelligent wearable device, or the like, and may further include an internet of things (internet of things, IOT) device or a smart home device, such as a smart water heater, a smart lamp, or a smart air conditioner. This is not limited in this application. In this embodiment, the terminal device may also be briefly referred to as a terminal. The terminal device is usually an intelligent electronic device that can provide a user interface, interact with a user, and provide a service function for the user.

When a plurality of electronic devices in the distributed system 10 are all devices deployed at home, the distributed system 10 may also be referred to as a home distributed system.

Each of the terminal devices in the distributed system 10 may be equipped with an Android^{®} system, a Windows^{®} system, an iOS^{®} system, a macOS^{®} system, a Linux' system, a HarmonyOS^{®} system (HarmonyOS, HOS), or another type of operating system. Operating systems of the terminal devices in the distributed system 10 may be the same or different. This is not limited in this application. In some embodiments, each of the terminals in the distributed system 10 is equipped with the HarmonyOS^{®} system. In this case, the distributed system 10 may be referred to as a HarmonyOS^{®} super virtual terminal (super virtual device), or may be referred to as a HarmonyOS^{®} super terminal. This means that capabilities of a plurality of terminals are integrated by using a distributed technology and stored in a virtual hardware resource pool, and terminal capabilities are uniformly managed, scheduled, and integrated according to a service requirement, to provide a service externally, so that a quick connection, capability mutual assistance, and resource sharing can be implemented between different terminals.

In the distributed system 10, the communications connection 109 is established between the terminals. The communications connection 109 may be a far field communications connection. For example, the terminals log in to a same account, to implement connection and communication through the internet. The plurality of electronic devices in the distributed system 10 may also log in to different accounts, but are connected in a binding manner. For example, an electronic device 100 and an electronic device 200 may log in to different accounts. The electronic device 100 binds the electronic device 200 to the electronic device 100 in a device management application, and then connects to the electronic device 200 by using the device management application. In the following embodiments of this application, the electronic device 100 may be any electronic device in the distributed system 10, and the electronic device 200 may also be any electronic device in the distributed system 10. For example, the electronic device 100 is the smartphone, and the electronic device 200 is the smart screen.

In the distributed system 10, the communications connection 109 may also be a near field communications connection, for example, a wired connection such as a universal serial bus (universal serial bus, USB) connection, or a wireless connection such as a Bluetooth (Bluetooth, BT) connection or a wireless fidelity (wireless fidelity, Wi-Fi) connection, to implement communication between the terminals without an account or with different accounts. A type of the communications connection is not limited in this embodiment of this application. A Bluetooth (Bluetooth, BT) module and/or a wireless local area network (wireless local area network, WLAN) module may be configured in the terminal device. The Bluetooth module may provide a Bluetooth communications solution including one or more of classic Bluetooth (Bluetooth 2.1) or Bluetooth low energy (Bluetooth low energy, BLE), and the WLAN module may provide a WLAN communications solution including one or more of wireless fidelity peer-to-peer connection (wireless fidelity peer-to-peer, Wi-Fi P2P), wireless fidelity local area network (wireless fidelity local area network, Wi-Fi LAN), or wireless fidelity software access point (wireless fidelity software access point, Wi-Fi softAP). In some embodiments, Wi-Fi P2P means that devices in a wireless network are allowed to connect to each other in a peer-to-peer manner without using a wireless router. In an Android^{®} system, Wi-Fi P2P may also be referred to as wireless fidelity direct (wireless fidelity direct, Wi-Fi direct). Devices between which a Wi-Fi P2P connection is established can exchange data, for example, transmit data such as a file, an image, and a video, over Wi-Fi (necessarily in a same frequency band) without connecting to a network or hotspot, to achieve peer-to-peer communication. Compared with Bluetooth, Wi-Fi P2P has advantages such as a faster search speed, a faster transmission speed, and a longer transmission distance. Data transmission and interaction may be performed between the terminals by using the communications connection 109.

In addition, the plurality of electronic devices in the distributed system 10 may also be connected and communicate with each other in any one of the foregoing manners. This is not limited in this embodiment of this application.

In this embodiment of this application, a conventional APP, for example, a conventional camera application, a gallery application, or a setting application, may be installed on each of the devices in the distributed system 10. In subsequent embodiments, the conventional APP may be briefly referred to as an APP.

In addition, a distributed application (distributed application) may be installed in the distributed system 10 provided in this embodiment of this application. The distributed application may be a system application, or may be a third-party application. This is not limited herein.

Unlike a conventional application that contains a plurality of capabilities, the distributed application supports deployment in a unit of a single capability. The APP is a computer program that can implement one or more functions, can run independently, and usually has a visual user interface and can interact with the user. One distributed application includes one or more function components.

**The function component** is a minimum capability unit that can run independently in an electronic device, and is a concept of abstract encapsulation of the single capability. The conventional APP integrates a plurality of functions, but the function component uses each of the functions as an independent service-oriented basic capability, where the function exists independently. That is, the function component is a program entity implementing a single function.

Each of the function components can be downloaded, installed, and run independently. A plurality of function components that form a same distributed application may be deployed in a same electronic device in the distributed system 10, or may be deployed in different electronic devices. The distributed application can implement modules in which functions such as remote virtualization, remote calling, meta-capability management, cross-platform compatibility, and security are encapsulated. The distributed application can call a computing capability that is of another device but that is not owned by a current device, and has a capability of splitting computing work of the current device to a plurality of devices for collaborative completion.

The distributed system 10 may give features such as more flexible orchestration and migration to the function component. The distributed system 10 may orchestrate appropriate function components to enable the function components to collaboratively complete a task.

It may be understood that the function component is only a term used in this embodiment, a meaning represented by the function component is already recorded in this embodiment, and a name of the function component does not constitute any limitation on this embodiment. In addition, in some other embodiments of this application, the function component may also be referred to as another term such as a system component, a system service, a service function, or a meta capability/atomic ability (Ability). In the subsequent embodiments of this application, the "function component" is used for unified description.

The Harmony^{®} system is used as an example. Function components in the Harmony^{®} system may be classified into the following two types.

### (1) Particle ability, PA

The PA is a function component without a UI, may be described as an atomic service or an atomic function module/unit, is a program entity that can implement a single function, and is a program segment that can be independently executed. The PA can provide support for an FA, for example, serve as a background service to provide a computing capability or serve as a data warehouse to provide a data access capability. For example, a beauty function, a positioning function, and an audio/video codec function may be encapsulated as the PA. In some embodiments, the particle ability (PA) may also be referred to as the atomic ability (AA).

The PA has features of multi-end deployment, distributed execution, and the like. The PA depends only on a system service, and does not depend on another PA.

The PA can actually implement and encapsulate remote virtualization, remote calling, PA management, cross-platform compatibility, security, and the like, and open a cross-device enabling and calling service to a developer, so that another device can call a computing capability of a current device and the current device collaborates with the another device to complete computing work. The PA supports a service ability, a data ability, and the like. The service ability is used to provide a capability of running a task in the background. The data ability is used to provide unified data access abstraction externally.

In this embodiment of this application, the PA may be called by another APP, FA, or PA, or the PA may call another PA, FA, or APP, to implement more complex and more functions.

### (2) Feature ability, FA

The FA is a function component that contains one or more groups of UIs and can provide a capability of interacting with the user. For example, a navigation interface in a map application, a video call interface in an instant messaging application, and the like may be implemented as the FA.

In some embodiments, the FA may be developed based on an MVVM (model-view-view-model) mode, to separate a view UI from service logic. Service logic code and view UI code are deployed separately. The view UI code may be integrated into another APP. During running, the view UI code can communicate with the service logic code to obtain data required for UI display.

The FA supports a page template capability, such as an empty ability, a login ability, and a setting ability. The FA can use a script language (java script, JS) to provide a declarative development mode, use a HTML-like and cascading style sheet (cascading style sheet, CSS) declarative programming language as a development language of a page layout and a page style, and support a JS language that conforms to an ECMAScript specification in providing page service logic.

The FA has capabilities such as installation free, running independently, and supporting cross-device UI migration and cross-device binary migration. The FA further has features of multi-end deployment and distributed execution.

In this embodiment of this application, the FA may be called by another APP, FA, or PA, or the FA may call another PA, FA, or APP, to implement more complex and more functions.

Similarly, the function components PA/FA feature multi-end deployment and distributed execution, that is, one distributed application may include a plurality of PAs/FAs, and the plurality of PAs/FAs may be deployed in a same terminal device or different terminal devices. The APP/PA/FA may be installed on each of the terminal devices in the distributed system 10, and the terminal device in the distributed system 10 may synchronize PA/FA information of another terminal device, to facilitate calling. For example, a PA/FA deployed in a terminal device may be called by an application deployed in the terminal device, or may be called by an application deployed in another terminal device in the distributed system 10.

It may be understood that "FA" and "PA" are merely terms used in this embodiment, and may also be referred to as other terms in some other embodiments of this application. For example, "PA" and "FA" may also be referred to as other nouns such as an atomic ability, an atomic application, a meta capability, and an atomic function module/unit. Similarly, "PA" may also be referred to as another noun such as a meta service, an atomic service, or an atomic service in some other embodiments, and "FA" may also be referred to as another noun such as a characteristic capability or a metaprogram in some other embodiments.

A plurality of function components that form one distributed application may be developed or provided by a same developer, or may be separately developed or provided by a plurality of developers. This is not limited herein. The development efficiency of the distributed application can be improved by developing function components by different developers together.

In this embodiment of this application, the function component may provide a standardized calling interface externally, and is called by a callee. a caller refers to an initiator of a calling request, and the callee refers to a target object of the calling request. A common APP may call a function component, and the called function component may further call another function component. This multi-level calling case may be referred to as chain calling.

In this embodiment of this application, in a calling relationship, a party that initiates a calling function may be referred to as a caller or a caller, and a party that is called by a caller and that provides a resource may be referred to as a callee or a callee. The caller or the callee may be the APP, the FA, or the PA. An initial initiator of an entire calling chain may be referred to as a first caller, and the first caller may be, for example, the APP or the FA. For example, the calling chain is as follows. An APP 1 calls a PA 1, the PA 1 calls a PA 2, and the PA 2 calls an FA 1. In this case, the APP 1 is the first caller. For another example, the calling chain is as follows. An FA 1 calls a PA 1, and the PA 1 calls a PA 2. In this case, the FA 1 is the first caller.

In some embodiments of this application, the caller may also be referred to as a subject application, and the callee may also be referred to as an object application.

In the calling chain, callers and callees may be deployed in a same electronic device, or may be deployed in different electronic devices.

A device in which the caller is located may be referred to as a subject device, and a device in which the callee is located may be an object device.

After a communications connection is established between the devices in the distributed system 10, each of the devices synchronizes function component information, APP information, and the like of another device in the distributed system. Specifically, each of the devices may synchronize an identifier of a function component and/or an APP installed on the device and device information (for example, a device identifier) of the device to the distributed system 10, and the identifier and the device information are visible to another device, to facilitate subsequent mutual calling between the devices in the distributed system 10. Each function component or APP can be called by which caller and can call which other function components or APPs, that is, calling permission and/or called permission, may be preset and recorded on each of the electronic devices, and synchronized in the distributed system 10.

With reference to the foregoing description, for ease of understanding, a simple example is provided herein for description.

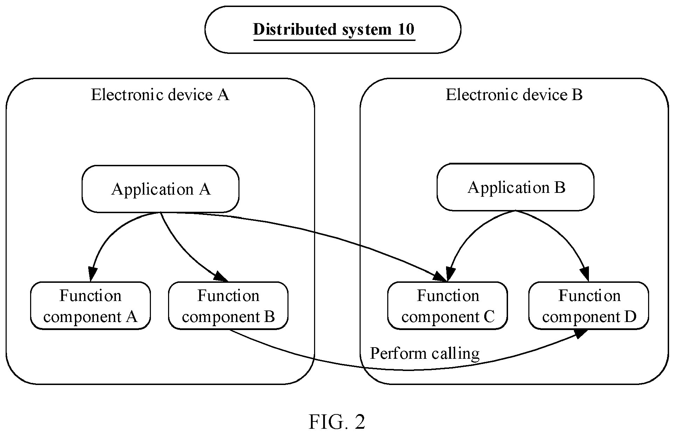

Referring to FIG. 2, a distributed system 10 includes an electronic device A and an electronic device B. An application A, a function component A, and a function component B are deployed in the electronic device A, and an application B, a function component C, and a function component D are deployed in the electronic device B. Each electronic device in the distributed system 10 may learn of and calls a function component on another electronic device. For example, the application A can implement a corresponding function by calling the function component A, the function component B, the function component C on the electronic device B, and the like, and the application B can implement a corresponding function by calling the function component C, the function component D, and the like. In addition to calling of the function component by the application, calling may also be performed between the function components. For example, the function component B deployed on the electronic device A may further call the function component D deployed on the electronic device B.

It should be noted that the scenarios shown in FIG. 1 and FIG. 2 are merely used to assist in describing the technical solutions provided in the embodiments of this application, but do not constitute a limitation on the embodiments of this application. In an actual service scenario, the distributed system 10 may include more or fewer terminal devices, more or fewer distributed applications and/or PAs/FAs may be deployed in each of the terminal devices, and each of the distributed applications may include more or fewer PAs/FAs. No limitation or the like is imposed on a calling relationship between the APPs/PAs/FAs.

The following describes an example of a structure of an electronic device provided in an embodiment of this application.

The electronic device provided in this embodiment of this application may be any of the electronic devices described in the distributed system 10 shown in FIG. 1, or may be an electronic device 100, an electronic device 200, or another electronic device in a subsequent embodiment of this application. This is not limited herein. Herein, the electronic device 100 is used as an example for description.

In this embodiment of this application, the electronic device 100 may include but is not limited to a mobile phone, a tablet computer, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), an augmented reality (augmented reality, AR) device, a virtual reality (virtual reality, VR) device, an artificial intelligence (artificial intelligence, AI) device, a wearable device, a vehicle-mounted device, a smart home device, and/or a smart city device. A specific type of the electronic device 100 is not limited in this embodiment of this application.

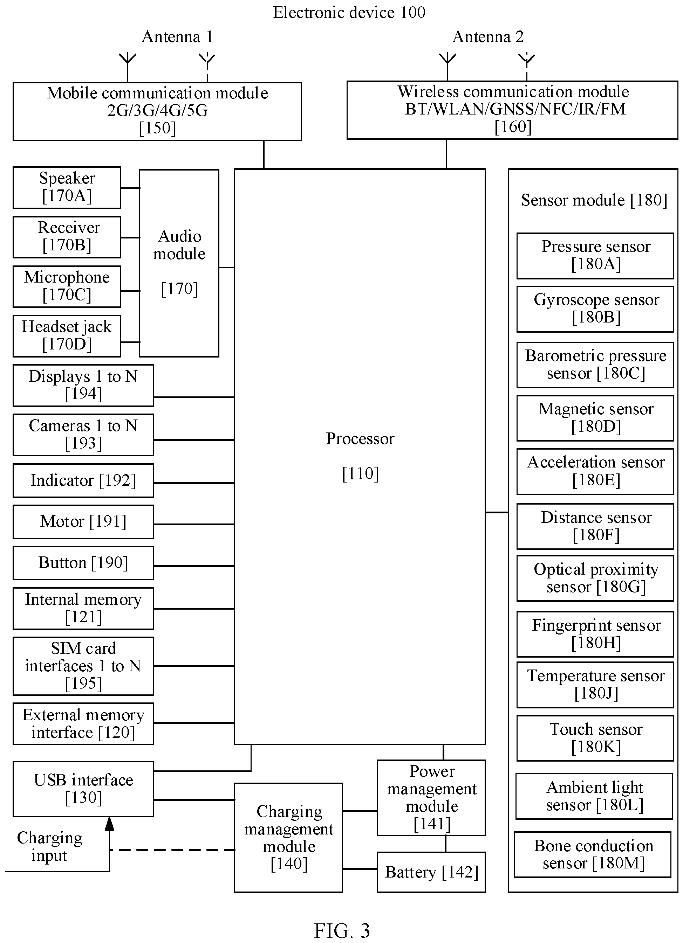

FIG. 3 is a schematic diagram of a hardware structure of an electronic device 100 according to an embodiment of this application.

The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of this application does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may generate an operation control signal based on an instruction operation code and a time sequence signal, to complete control of instruction reading and instruction execution.

A memory may be further disposed in the processor 110, and is configured to store instructions and data. In some embodiments, the memory in the processor 110 is a cache memory. The memory may store instructions or data that have/has just been used or cyclically used by the processor 110. If the processor 110 needs to use the instructions or the data again, the processor may directly call the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronization serial bus, and includes one serial data line (serial data line, SDA) and one serial clock line (serial clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the electronic device 100.

The I2S interface may be configured to perform audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communication module 160 through the I2S interface, to implement a function of answering a call through a Bluetooth headset.

The PCM interface may also be configured to perform audio communication, and sample, quantize, and encode an analog signal. In some embodiments, the audio module 170 may be coupled to the wireless communication module 160 through a PCM bus interface. In some embodiments, the audio module 170 may also transmit an audio signal to the wireless communication module 160 through the PCM interface, to implement a function of answering a call through a Bluetooth headset. Both the I2S interface and the PCM interface may be configured to perform audio communication.

The UART interface is a universal serial data bus, and is configured to perform asynchronous communication. The bus may be a two-way communications bus. The bus converts data between serial communication and parallel communication. In some embodiments, the UART interface is usually configured to connect the processor 110 to the wireless communication module 160. For example, the processor 110 communicates with a Bluetooth module in the wireless communication module 160 through the UART interface, to implement a Bluetooth function. In some embodiments, the audio module 170 may transmit an audio signal to the wireless communication module 160 through the UART interface, to implement a function of playing music through a Bluetooth headset.

The MIPI interface may be configured to connect the processor 110 to a peripheral component such as the display 194 or the camera 193. The MIPI interface includes a camera serial interface (camera serial interface, CSI), a display serial interface (display serial interface, DSI), and the like. In some embodiments, the processor 110 communicates with the camera 193 through the CSI, to implement a photographing function of the electronic device 100. The processor 110 communicates with the display 194 through the DSI interface, to implement a display function of the electronic device 100.

The GPIO interface may be configured by software. The GPIO interface may be configured as a control signal or a data signal. In some embodiments, the GPIO interface may be configured to connect the processor 110 to the camera 193, the display 194, the wireless communication module 160, the audio module 170, the sensor module 180, or the like. The GPIO interface may alternatively be configured as the I2C interface, the I2S interface, the UART interface, the MIPI interface, or the like.

The USB interface 130 is an interface that conforms to a USB standard specification, and may be specifically a mini USB interface, a micro USB interface, a USB type-C interface, or the like. The USB interface 130 may be configured to connect to a charger to charge the electronic device 100, or may be configured to transmit data between the electronic device 100 and a peripheral device, or may be configured to connect to a headset for playing audio through the headset. The interface may be further configured to connect to another electronic device such as an AR device.

It may be understood that an interface connection relationship between the modules that is shown in this embodiment of the present invention is merely an example for description, and does not constitute a limitation on a structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive a charging input from the charger. The charger may be a wireless charger or a wired charger. In some embodiments of wired charging, the charging management module 140 may receive a charging input of a wired charger through the USB interface 130. In some embodiments of wireless charging, the charging management module 140 may receive a wireless charging input through a wireless charging coil of the electronic device 100. The charging management module 140 supplies power to the electronic device through the power management module 141 while charging the battery 142.

The power management module 141 is configured to connect the battery 142 and the charging management module 140 to the processor 110. The power management module 141 receives an input from the battery 142 and/or the charging management module 140, and supplies power to the processor 110, the internal memory 121, the display 194, the camera 193, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communications frequency bands. Different antennas may be further reused, to improve antenna utilization. For example, the antenna 1 may be reused as a diversity antenna of a wireless local area network. In some other embodiments, the antenna may be used in combination with a tuning switch.

The mobile communication module 150 may provide a wireless communication solution that is applied to the electronic device 100 and that includes 2G/3G/4G/5G. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some function modules in the mobile communication module 150 may be disposed in the processor 110. In some embodiments, at least some function modules of the mobile communication module 150 may be disposed in a same device as at least some modules of the processor 110.

The modem processor may include a modulator and a demodulator. The modulator is configured to modulate a to-be-sent low-frequency baseband signal into a medium/high-frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by an audio device (which is not limited to the speaker 170A, the receiver 170B, or the like), or displays an image or a video by the display 194. In some embodiments, the modem processor may be an independent component. In some other embodiments, the modem processor may be independent of the processor 110, and is disposed in a same device as the mobile communication module 150 or another function module.

The wireless communication module 160 may provide a wireless communication solution that is applied to the electronic device 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communications processor module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, in the electronic device 100, the antenna 1 and the mobile communication module 150 are coupled, and the antenna 2 and the wireless communication module 160 are coupled, so that the electronic device 100 can communicate with a network and another device by using a wireless communications technology. The wireless communications technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 100 may implement a display function through the GPU, the display 194, the application processor, and the like. The GPU is a microprocessor for image processing, and is connected to the display 194 and the application processor. The GPU is configured to perform mathematical and geometric computation, and render an image. The processor 110 may include one or more GPUs that execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the electronic device 100 may include one or N displays 194, where N is a positive integer greater than 1.

The electronic device 100 may implement a photographing function through the ISP, the camera 193, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the electronic device 100 may include one or N cameras 193, where N is a positive integer greater than 1.

The digital signal processor is configured to process a digital signal, and may process another digital signal in addition to the digital image signal. For example, when the electronic device 100 selects a frequency, the digital signal processor is configured to perform Fourier transformation on frequency energy.

The video codec is configured to compress or decompress a digital video. The electronic device 100 may support one or more video codecs. In this way, the electronic device 100 may play back or record videos in a plurality of coding formats, for example, moving picture experts group (moving picture experts group, MPEG)-1, MPEG-2, MPEG-3, and MPEG-4.

The NPU is a neural-network (neural-network, NN) computing processor, quickly processes input information by referring to a structure of a biological neural network, for example, by referring to a mode of transmission between human brain neurons, and may further continuously perform self-learning. Applications such as intelligent cognition, for example, image recognition, facial recognition, speech recognition, and text understanding, of the electronic device 100 may be implemented through the NPU.

The internal memory 121 may include one or more random access memories (random access memories, RAMs) and one or more non-volatile memories (non-volatile memories, NVMs).

The random access memory has features of a high read/write speed and volatile. Volatile means that once power is off, data stored in the RAM disappears. Generally, the static power consumption of the random access memory is very low, and the running power consumption is relatively high.

The non-volatile memory has features of non-volatile and stable data storage. Non-volatile means that after power is off, data stored in the memory does not disappear, and data can be stored for a long time after the power-off.

The random access memory may include a static random-access memory (static random-access memory, SRAM), a dynamic random access memory (dynamic random access memory, DRAM), a synchronous dynamic random access memory (synchronous dynamic random access memory, SDRAM), a double data rate synchronous dynamic random access memory (double data rate synchronous dynamic random access memory, DDR SDRAM, where for example, a 5th generation DDR SDRAM is usually referred to as a DDR5 SDRAM), and the like.

The non-volatile memory may include a magnetic disk storage (magnetic disk storage) device, a flash memory (flash memory), and the like.

The magnetic disk storage device is a storage device that uses a magnetic disk as a storage medium, and has features such as a large storage capacity, a high data transmission rate, and long-term storage of stored data.

The flash memory may be classified into a NOR flash, a NAND flash, a 3D NAND flash, and the like according to an operation principle, may be classified into a single-level cell (single-level cell, SLC), a multi-level cell (multi-level cell, MLC), a triple-level cell (triple-level cell, TLC), a fourth-level cell (quad-level cell, QLC), and the like according to a storage cell potential level, and may be classified into a universal flash storage (English: universal flash storage, UFS), an embedded multimedia card (embedded multimedia card, eMMC), and the like according to a storage specification.

The random access memory may be directly read and written by the processor 110, may be configured to store an executable program (for example, a machine instruction) of an operating system or another running program, and may be further configured to store data of a user, data of an application, and the like.

The non-volatile memory may also store an executable program, data of a user, data of an application, and the like, which may be loaded into the random access memory in advance for directly reading and writing by the processor 110.

The external memory interface 120 may be configured to connect to an external non-volatile memory, to extend a storage capability of the electronic device 100. The external non-volatile memory communicates with the processor 110 through the external memory interface 120, to implement a data storage function. For example, files such as music and videos are stored in the external non-volatile memory.

The electronic device 100 may implement an audio function, for example, music playing and recording, through the audio module 170, the speaker 170A, the receiver 170B, the microphone 170C, the headset jack 170D, the application processor, and the like.

The audio module 170 is configured to convert digital audio information into an analog audio signal for output, and is also configured to convert an analog audio input into a digital audio signal. The audio module 170 may be further configured to encode and decode an audio signal. In some embodiments, the audio module 170 may be disposed in the processor 110, or some function modules in the audio module 170 are disposed in the processor 110.

The speaker 170A, also referred to as a "loudspeaker", is configured to convert an audio electrical signal into a sound signal. The electronic device 100 may be configured to listen to music or answer a call in a hands-free mode over the speaker 170A.

The receiver 170B, also referred to as an "earpiece", is configured to convert an electrical audio signal into a sound signal. When a call is answered or speech information is received through the electronic device 100, the receiver 170B may be put close to a human ear to listen to a voice.

The microphone 170C, also referred to as a "mike" or a "mic", is configured to convert a sound signal into an electrical signal. When making a call or sending a voice message, a user may make a sound near the microphone 170C through the mouth of the user, to input a sound signal to the microphone 170C. At least one microphone 170C may be disposed in the electronic device 100. In some other embodiments, two microphones 170C may be disposed in the electronic device 100, to collect a sound signal and implement a noise reduction function. In some other embodiments, three, four, or more microphones 170C may alternatively be disposed in the electronic device 100, to collect a sound signal, implement noise reduction, and identify a sound source, so as to implement a directional recording function and the like.

The headset jack 170D is configured to connect to a wired headset. The headset jack 170D may be a USB interface 130, or may be a 3.5 mm open mobile terminal platform (open mobile terminal platform, OMTP) standard interface or cellular telecommunications industry association of the USA (cellular telecommunications industry association of the USA, CTIA) standard interface.

The pressure sensor 180A is configured to sense a pressure signal, and can convert the pressure signal into an electrical signal. In some embodiments, the pressure sensor 180A may be disposed on the display 194. There are a plurality of types of pressure sensors 180A, such as a resistive pressure sensor, an inductive pressure sensor, and a capacitive pressure sensor. The capacitive pressure sensor may include at least two parallel plates made of conductive materials. When a force is applied to the pressure sensor 180A, a capacitance between electrodes changes. The electronic device 100 determines pressure intensity based on the change in the capacitance. When a touch operation is performed on the display 194, the electronic device 100 detects intensity of the touch operation through the pressure sensor 180A. The electronic device 100 may also calculate a touch location based on a detection signal of the pressure sensor 180A. In some embodiments, touch operations that are performed in a same touch position but have different touch operation intensity may correspond to different operation instructions. For example, when a touch operation whose touch operation intensity is less than a first pressure threshold is performed on an SMS message application icon, an instruction for viewing an SMS message is executed. When a touch operation whose touch operation intensity is greater than or equal to the first pressure threshold is performed on the SMS message application icon, an instruction for creating a new SMS message is executed.

The gyroscope sensor 180B may be configured to determine a moving posture of the electronic device 100. In some embodiments, an angular velocity of the electronic device 100 around three axes (namely, axes x, y, and z) may be determined through the gyroscope sensor 180B. The gyroscope sensor 180B may be configured to implement image stabilization during photographing. For example, when the shutter is pressed, the gyroscope sensor 180B detects an angle at which the electronic device 100 jitters, calculates, based on the angle, a distance for which a lens module needs to compensate, and allows the lens to cancel the jitter of the electronic device 100 through reverse motion, to implement image stabilization. The gyroscope sensor 180B may also be used in a navigation scenario and a somatosensory game scenario.

The barometric pressure sensor 180C is configured to measure barometric pressure. In some embodiments, the electronic device 100 calculates an altitude through the barometric pressure measured by the barometric pressure sensor 180C, to assist in positioning and navigation.

The magnetic sensor 180D includes a Hall sensor. The electronic device 100 may detect opening and closing of a flip leather case by using the magnetic sensor 180D. In some embodiments, when the electronic device 100 is a flip phone, the electronic device 100 may detect opening and closing of a flip cover through the magnetic sensor 180D. Further, a feature such as automatic unlocking of the flip cover is set based on a detected opening or closing state of the leather case or a detected opening or closing state of the flip cover.

The acceleration sensor 180E may detect accelerations in various directions (usually on three axes) of the electronic device 100. When the electronic device 100 is still, a magnitude and a direction of gravity may be detected. The acceleration sensor 180E may be further configured to identify a posture of the electronic device, and is used in an application such as switching between a landscape mode and a portrait mode or a pedometer.

The distance sensor 180F is configured to measure a distance. The electronic device 100 may measure the distance in an infrared manner or a laser manner. In some embodiments, in a photographing scenario, the electronic device 100 may measure a distance through the distance sensor 180F to implement quick focusing.

The optical proximity sensor 180G may include, for example, a light-emitting diode (LED) and an optical detector, for example, a photodiode. The light-emitting diode may be an infrared light-emitting diode. The electronic device 100 emits infrared light by using the light-emitting diode. The electronic device 100 detects infrared reflected light from a nearby object through the photodiode. When sufficient reflected light is detected, it may be determined that there is an object near the electronic device 100. When insufficient reflected light is detected, the electronic device 100 may determine that there is no object near the electronic device 100. The electronic device 100 may detect, by using the optical proximity sensor 180G, that the user holds the electronic device 100 close to an ear for a call, to automatically turn off a screen for power saving. The optical proximity sensor 180G may also be used in a smart cover mode or a pocket mode to automatically perform screen unlocking or locking.

The ambient light sensor 180L is configured to sense ambient light brightness. The electronic device 100 may adaptively adjust brightness of the display 194 based on the sensed ambient light brightness. The ambient light sensor 180L may also be configured to automatically adjust white balance during photographing. The ambient light sensor 180L may also cooperate with the optical proximity sensor 180G to detect whether the electronic device 100 is in a pocket, to avoid an accidental touch.

The fingerprint sensor 180H is configured to collect a fingerprint. The electronic device 100 may use a feature of the collected fingerprint to implement fingerprint-based unlocking, application lock access, fingerprint-based photographing, fingerprint-based call answering, and the like.

The temperature sensor 180J is configured to detect a temperature. In some embodiments, the electronic device 100 performs a temperature processing policy through the temperature detected by the temperature sensor 180J. For example, when the temperature reported by the temperature sensor 180J exceeds a threshold, the electronic device 100 lowers performance of a processor nearby the temperature sensor 180J, to reduce power consumption for thermal protection. In some other embodiments, when the temperature is less than another threshold, the electronic device 100 heats the battery 142 to prevent the electronic device 100 from being shut down abnormally due to a low temperature. In some other embodiments, when the temperature is lower than still another threshold, the electronic device 100 boosts an output voltage of the battery 142 to avoid abnormal shutdown caused by a low temperature.

The touch sensor 180K is also referred to as a "touch component". The touch sensor 180K may be disposed on the display 194, and the touch sensor 180K and the display 194 constitute a touchscreen, which is also referred to as a "touchscreen". The touch sensor 180K is configured to detect a touch operation performed on or near the touch sensor. The touch sensor may transfer the detected touch operation to the application processor to determine a type of the touch event. A visual output related to the touch operation may be provided through the display 194. In some other embodiments, the touch sensor 180K may also be disposed on a surface of the electronic device 100 at a position different from that of the display 194.

The bone conduction sensor 180M may obtain a vibration signal. In some embodiments, the bone conduction sensor 180M may obtain a vibration signal of a vibration bone of a human vocal-cord part. The bone conduction sensor 180M may also be in contact with a body pulse to receive a blood pressure beating signal. In some embodiments, the bone conduction sensor 180M may also be disposed in the headset, to form a bone conduction headset. The audio module 170 may obtain a speech signal through parsing based on the vibration signal that is of the vibration bone of the vocal-cord part and that is obtained by the bone conduction sensor 180M, to implement a speech function. The application processor may parse heart rate information based on the blood pressure beating signal obtained by the bone conduction sensor 180M, to implement a heart rate detection function.

The button 190 includes a power button, a volume button, and the like. The button 190 may be a mechanical button, or may be a touch button. The electronic device 100 may receive a key input, and generate a key signal input related to a user setting and function control of the electronic device 100.

The motor 191 may generate a vibration prompt. The motor 191 may be configured to provide an incoming call vibration prompt and touch vibration feedback. For example, touch operations performed on different applications (for example, photographing and audio playback) may correspond to different vibration feedback effects. The motor 191 may also correspond to different vibration feedback effects for touch operations performed on different areas of the display 194. Different application scenarios (for example, a time reminder, information receiving, an alarm clock, and a game) may also correspond to different vibration feedback effects. A touch vibration feedback effect may be further customized.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with or separation from the electronic device 100. The electronic device 100 may support one or N SIM card interfaces, where N is a positive integer greater than 1. The SIM card interface 195 may support a nano-SIM card, a micro-SIM card, a SIM card, and the like. A plurality of cards may be inserted into a same SIM card interface 195 at the same time. The plurality of cards may be of a same type or different types. The SIM card interface 195 is compatible with different types of SIM cards. The SIM card interface 195 is also compatible with an external storage card. The electronic device 100 interacts with a network through the SIM card, to implement functions such as making a call and data communication. In some embodiments, the electronic device 100 uses an eSIM, that is, an embedded SIM card. The eSIM card may be embedded into the electronic device 100, and cannot be separated from the electronic device 100.

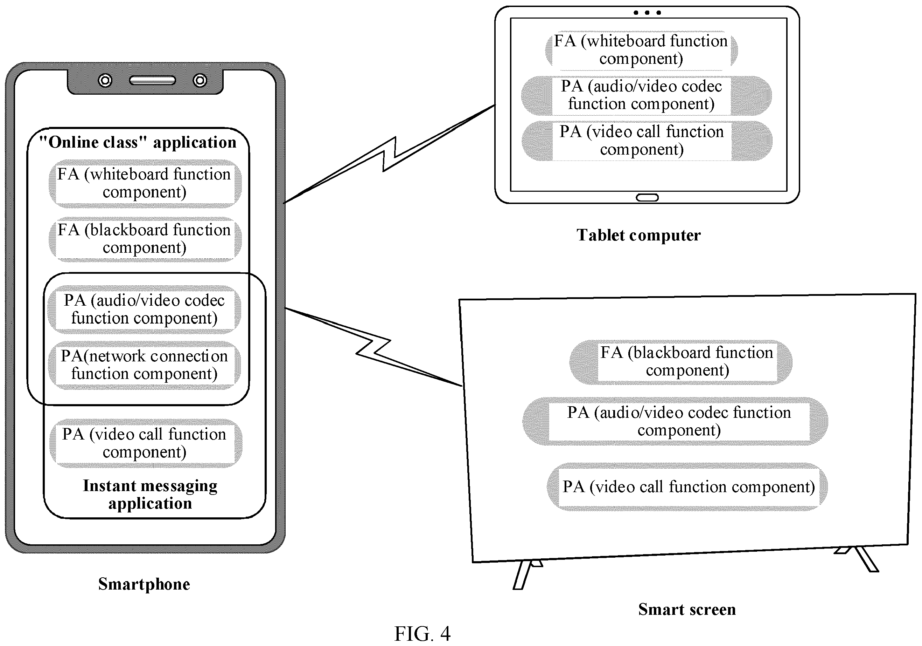

With reference to the foregoing description of the distributed system 10, FIG. 4 shows an example of a possible distributed **distance education service scenario.**

As shown in FIG. 4, a distributed system includes electronic devices such as a smartphone, a tablet computer, and a smart screen. Devices in the distributed system are connected to each other. Different software operating systems (operating system, OS) may be configured for the smartphone, the tablet computer, and the smart screen. For example, an Android^{®} system may be configured for the smartphone and the tablet computer, and a Harmony^{®} system may be configured for the smart screen.

An "online class" application is installed on the smartphone. The "online class" is an application that is installed in an electronic device and that provides various functions required for a teacher and a student to attend a distance class. A name of the application is not limited in this embodiment of this application. The "online class" may include the following several function components: a blackboard function component, a whiteboard function component, an audio/video codec function component, and a network connection function component. The blackboard function component and the whiteboard function component belong to an FA, and the audio/video codec function component and the network connection function component belong to a PA. The blackboard function component provides a distance course lecturing function. The whiteboard function component provides a distance question answering function. The audio/video codec function component provides a video/audio codec function. The blackboard function component and the whiteboard function component may further implement a video communication function by calling a video call function component in the smartphone. The video call function component belongs to the PA.

On a teacher side, when using the "online class" on the smartphone, the teacher may migrate or switch the blackboard function component to the smart screen, to lecture on a course on the smart screen.

On a student side, when using the "online class" on the smartphone, the student may migrate or switch the whiteboard function component to the tablet computer, to answer a question on the tablet computer.

Migrating or switching a function component from one device A to another device B may include the following two types: 1. UI migration, where when a view UI of the FA is separated from service logic, when the device A can run code of the service logic, the device B can be triggered to run code of the view UI, and it seems to the user that the function component is migrated from the device A to the device B; and 2. overall migration, where the overall migration means that after the device B downloads and installs the function component from the device A or from a network, the function component runs and provides a corresponding function.

In the distance education service scenario, the "online class" is a caller, and the whiteboard function component in the tablet computer and the blackboard function component in the smart screen are callees.

FIG. 4 further shows another possible **distributed video call service scenario.**

As shown in FIG. 4, another distributed application such as an instant messaging application may further be installed on the smartphone. The instant messaging application may provide a video call, a voice call, and another communication function. The instant messaging application may include the following function components: a video call function component, an audio/video codec function component, and a network connection function component.

When using the instant messaging application on the smartphone, a user may migrate or switch the video call function component of the application to a smart screen or a tablet computer, to perform a video call by using a camera and a display of the smart screen or the tablet computer.

In the video call service scenario, the instant messaging application is a caller, and the video call function component is a callee.

It should be noted that the service scenario shown in FIG. 4 is merely used to assist in describing the technical solutions in the embodiments of this application. In an actual service scenario, the distributed system shown in FIG. 4 may include more terminal devices, more or fewer function components may be deployed in each of the devices, and each distributed application may include more or fewer function components.

Software and hardware capabilities of different devices may be integrated by using the distributed system 10 shown in FIG. 1 and FIG. 2 and the distributed service scenario shown in FIG. 4, to implement intelligent all-scenario experience.

Because the function component may be called across devices in the distributed system 10 shown in FIG. 1 and FIG. 2 and the distributed service scenario shown in FIG. 4, to avoid a problem such as confusion, misuse, or malicious use of memory data of each caller, to ensure that each function component can properly access a device resource, and to ensure secure sharing of a resource, data, and the like between the devices in the distributed system, an embodiment of this application provides an access control method. The following describes in detail a specific solution provided.

Herein, the resource shared between the devices in the distributed system may include but is not limited to: a software resource, a hardware resource, a peripheral or an accessory resource of the device, and the like.

Data generated by an application or the function component in a running process of the application or the function component may include the following two types.

### 1: Memory data

When an electronic device starts up or initiates an instance of the application or the function component, corresponding memory data is generated.

The memory data is data in a RAM and can be read at any time. The data disappears when power is off.

The instance is an application or function component in a running state. In the embodiments of this application, the instance may be a process or may be a thread. The process is an execution activity of the application or function component on a computer. The thread is a single sequential control flow in the execution of the application or function component. One process may include a plurality of threads.

That is, as long as an application or a function component starts to run, a corresponding instance is generated, and memory data is generated.

### 2. Application data

The application data refers to content written in a running process of the application or the function component, for example, a photo or a video obtained by a photographing application, or a text edited by a user in a document application. The application data may also be referred to as file data.

The application data is data in an NVM, and may be stably stored in the NVM for a long time.

In a conventional single-device scenario, an APP in an electronic device applies to a user for access authorization of a sensitive resource in a form of an independent subject, and directly provides various services for the user after the authorization succeeds.

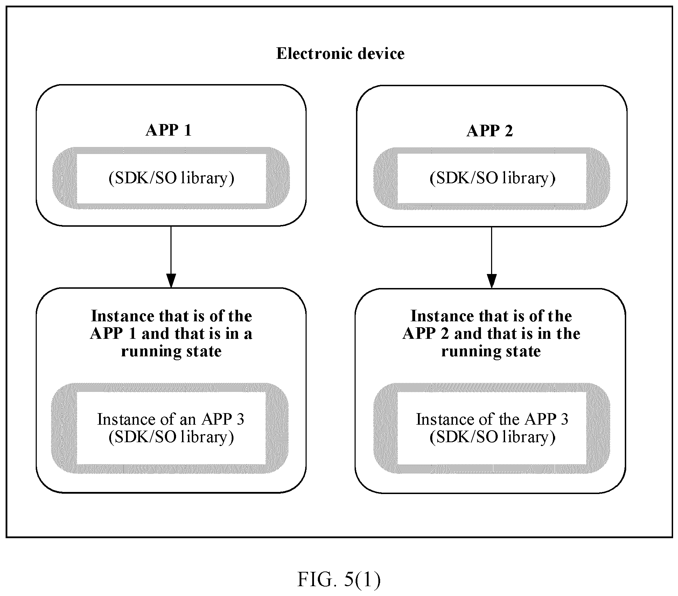

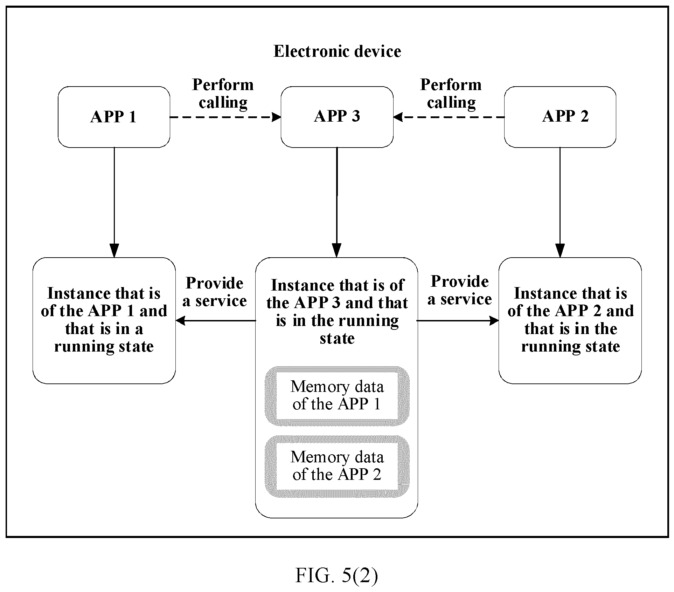

FIG. 5(1) and FIG. 5(2) show an example of two implementations of providing a service when a conventional APP is called in a single-device system.

In an implementation, a called APP may provide a service for a calling APP in a form of a third-party library.

As shown in FIG. 5(1), an APP 1 and an APP 2 are callers, and calls a service corresponding to an APP 3. The called APP 3 may be integrated into a host APP (that is, the caller) in a form of a third-party library, for example, a software development kit (software development kit, SDK) library or a dynamic link library (.so file), to provide a sharing service for the host APP. The shared service means that the APP 3 provides services for a plurality of different APPs simultaneously. Because the third-party library is integrated into the calling APP, various resources and permissions owned by the calling APP can be obtained. Consequently, there may be a problem that the third-party library abuses a resource such as memory data of the calling APP, and data security of the calling APP cannot be ensured.

In another implementation, the called APP may provide services for different calling APPs in a form of an independent APP.

As shown in FIG. 5(2), an APP 1 and an APP 2 are callers, and calls a service corresponding to an APP 3. Each of the APPs has an instance corresponding to the APP, and the instances are naturally isolated from each other. The called APP 3 may provide a shared service for different callers (the APP 1 and the APP 2) in a form of a single instance. In this manner, memory data of the APP 1 and memory data of the APP 2 can be isolated only by the APP 3 itself. When a vulnerability or malicious behavior occurs in the APP 3, the memory data of the APP 1 and the memory data of the APP 2 may be misused by the APP 3. In addition, because the called APP 3 cannot distinguish between identities of different calling APPs (the APP 1 and the APP 2), there are problems that a calling relationship cannot be traced, that it is difficult to record an audit log, and the like.

In a distributed system, permission authorization is performed only on an APP visible to a user, but permission authorization cannot be performed on a function component that cannot be directly perceived by the user. Consequently, a data security risk also exists when a calling APP calls the function component.

In a distributed service scenario, when a calling APP calls a function component, if the manner shown in FIG. 5(1) is used that the called function component provides a service for the calling APP in the form of the third-party library, when the function component provides the service for the calling APP, there may be a problem that the third-party library abuses a resource owned by the calling APP. If the manner shown in FIG. 5(2) is used that the called function component provides a shared service for different calling APPs in the form of the single instance, the function component may obtain memory data from different devices and different callers, and a problem of abuse or misuse of memory data of each of the callers may occur due to a vulnerability or malicious behavior of the function component. In addition, because the called function component cannot distinguish between identities of different calling APPs, there are problems that a calling relationship cannot be traced, that it is difficult to record an audit log, and the like. For example, in the distributed service scenario shown in FIG. 4, the video call capability unit in the smart screen may simultaneously obtain data of the "online class" and data of the instant messaging application in the smartphone, and the two types of data may be misused.

An embodiment of this application provides an access control method, an electronic device, and a system, to resolve a problem such as abuse, confusion, misuse, or leakage of memory data of each caller in a calling event. The access control method may be applied to a communications system including a plurality of electronic devices.

According to the method provided in this application, a same callee may enable a plurality of instances, and provide services for different callers by using different instances. Due to a natural isolation attribute between the instances, the different instances cannot access memory data of each other. In this way, a system-level memory data security mechanism can be provided. This avoids abuse, misuse, and leakage of the memory data of the callers, and ensures data security.

According to the access control method provided in this application, running of the different instances can be supported when the callee provides services for the different callers, and memory data of the different instances is kept isolated. This more effectively reduces a risk of abuse, confusion, misuse, or leakage of memory data of each caller, and ensures data security.

The following describes, by using an example, a software system architecture of an electronic device 100 according to the embodiments of this application.

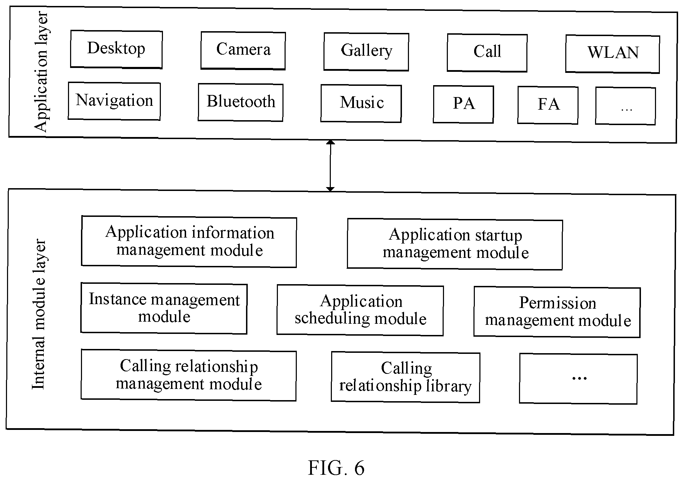

FIG. 6 is a block diagram of a software architecture of an electronic device 100 according to an embodiment of this application. A software system of the electronic device 100 may adopt a layered architecture, an event-driven architecture, a microkernel architecture, a microservice architecture, a cloud architecture, or the like. For example, the software system of the electronic device 100 includes but is not limited to Harmony^{®}, iOS^{®}, Android^{®}, Windows^{®}, Linux^{®}, or another operating system.

In the layered architecture, the software system is divided into several layers, and each layer has a clear role and task. Layers communicate with each other through software interfaces (application programming interfaces, APIs). In some embodiments, as shown in FIG. 6, the software architecture of the electronic device 100 may include an application layer, an internal module layer, and the like.

As shown in FIG. 6, the application layer may include a series of APPs and function components. The application layer may include a system application and a third-party non-system application. For example, the application layer may include but is not limited to Desktop, Camera, Gallery, Call, Navigation, WLAN, Bluetooth, Music, a plurality of PAs, and a plurality of FAs.

The internal module layer can provide application programming interface and function support for the APP and PA/FA of the application layer. The internal module layer may include some predefined functions and/or function modules/services. Modules at the internal module layer may collaborate, and are configured to manage discovery, registration, query, and migration of an application or a function component, and manage creation and calling of an instance of the application or the function component. These modules may collaborate with another module in the electronic device to implement the access control method provided in this embodiment of this application.

For example, the internal module layer may include but is not limited to an application information management module, an application startup management module, an instance management module, an application scheduling module, a permission management module, a calling relationship management module, a calling relationship library, and the like.

The application information management module is configured to manage information about each APP or function component installed on the electronic device 100, to facilitate discovery, registration, installation, uninstallation, and the like of each APP/PA/FA. For example, the application information management module allocates a user identifier (user identifier, UID) to each APP or function component, or allocates a process identifier (process identifier, PID) to each instance in a running state. For another example, the application information management module manages registration information of each APP or PA/FA, for example, obtains, records, and manages an identifier of each APP/PA/FA, and deploys an identifier of an electronic device of the APP/PA/FA, to facilitate a function such as registration information query.

The application startup management module is configured to manage startup work of each application or function component. For example, when the electronic device 100 receives a request of another device for calling a specific application, the application startup management module may start up the application.

The instance management module is responsible for dynamically starting up or creating an instance based on information about the caller. Specifically, when different devices and/or different callers request to call an application or a function component in the electronic device 100, the instance management module separately enables an instance of the application or the function component for the different devices and/or the different callers, to respectively provide services for the different devices and/or the different callers. The instance management module is further configured to manage a life cycle of each enabled instance, for example, starting up, stopping, destroying, and restarting up an instance.

The application scheduling module may be responsible for managing calling between the APP, the PA, and the FA, for example, may be configured to initiate a calling request of a caller for a callee. For example, an APP sends a calling request for a specific PA to the application scheduling module under triggering of a user operation, and then the application scheduling module may parse the calling request to obtain an identifier of the APP, an identifier of the called PA, and a corresponding request parameter.

The permission management module may be configured to manage permission information of each APP/PA/FA, and is responsible for controlling permission of a caller to call a callee, permission of each APP/PA/FA to access a system resource, and the like. The permission management module may be further configured to be responsible for synchronizing permission information and/or authorization information of APPs/PAs/FAs respectively deployed in a plurality of terminal devices in a same distributed system. The permission management module may be further configured to generate and provide permission-related prompt information for a user. In some embodiments, when obtaining a case in which an APP that has no permission to call a specific instance initiates a request for calling the instance, the permission management module may ask the user whether to grant permission, change permission, delete a malicious APP, or the like.

The calling relationship management module is responsible for maintaining a plurality of groups of calling relationships including instances of callers and instances of callees, and stores the calling relationships in the calling relationship library.

The calling relationship library may be configured to store the plurality of groups of calling relationships including the callers and the callees. Each group of calling relationships may include a calling relationship identifier (identifier, ID), information about the caller, information about the callee, and the like. The information about the caller may include a name of the caller, an application identifier of the caller, a device ID of the caller, a user identifier (user identifier, UID) of the caller, a developer signature, and the like. The information about the callee may include information such as a name of the callee, an application identifier of the callee, a device ID of the callee, a UID of an instance, and a process identifier (process identifier, PID) of the instance.

Referring to Table 1 below, two groups of calling relationships are shown as an example.

**Table 1**

| Calling relationship ID | Information about the caller | | | Information about the callee | | | |
|---|---|---|---|---|---|---|---|
| | Name | Device ID | Developer signature | Name | Device ID | UID of an instance | PID of the instance |
| 1 | APP 1 | Electronic device 100 | HUAWEI | Function component 3 | Electronic device 300 | UID 1 | PID 1 |
| 2 | APP 2 | Electronic device 200 | HUAWEI | Function component 3 | Electronic device 300 | UID 2 | PID 2 |

It can be learned from Table 1 that, the two groups of calling relationships are respectively that an APP 1 on the electronic device 100 and an APP 2 on an electronic device 200 respectively call a function component 3 in an electronic device 300, and the electronic device 300 enables two instances of the function component 3 to respectively provide services for the APP 1 and the APP 2.

The calling relationship shown in Table 1 may be stored not only in the electronic device in which the callee is located, but also in the electronic device in which the caller is located. This is not limited herein.

The foregoing description of the software architecture of the electronic device 100 is merely an example. It may be understood that the software architecture shown in this embodiment of the present invention does not constitute a specific limitation on this application. In some other embodiments of this application, the software architecture of the electronic device 100 may include more or fewer modules than those shown in the figure, or some modules may be combined, or some modules may be split, or different architecture arrangements may be used. The components shown in the figure may be implemented by hardware, software, or a combination of software and hardware.

The following describes an **access control model** according to an embodiment of this application.

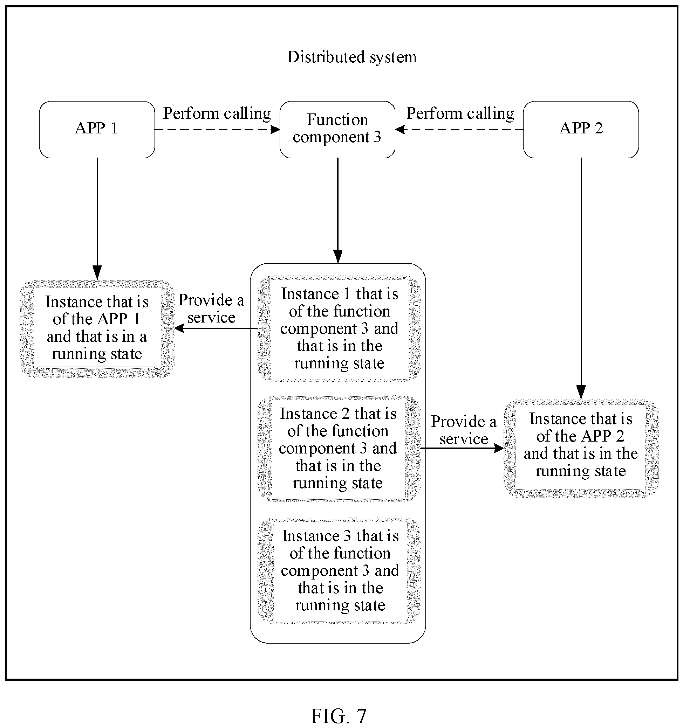

In an embodiment shown in FIG. 7, a calling APP 1, a calling APP 2, and a called function component 3 may be installed in a distributed system. The APP 1, the APP 2, and a function component 3 may be installed in a same device or different devices in the distributed system. This is not limited in this embodiment. APPs and/or function components in a same distributed system may call each other. A function component 3 of a callee may be an FA or a PA. Types of the caller and the callee are not limited in this embodiment. For example, in some other embodiments, the caller is not limited to an APP, and may alternatively be implemented as another function component, and the callee may be not limited to a function component, and may alternatively be implemented as an APP. The APP may call the function component, and the function component may call another function component. The APP may alternatively call another APP, and the function component may alternatively call the APP.

The electronic device allocates physical addresses in a RAM to different instances in a unit of a process, and maps the physical addresses to virtual addresses that can be accessed by the process. When needing to run an instance, the electronic device finds, based on the virtual address, physical address space that is in the RAM and that is correspondingly allocated to the instance, and runs the instance in the physical address space. In other words, the instance finds an actual storage location of memory data by using the virtual address. In such a mechanism, different instances can access, by using their own virtual addresses, only physical addresses corresponding to their own virtual addresses, that is, the different instances cannot access physical space of each other in the RAM. Therefore, the instances are isolated from each other.

As shown in FIG. 7, the APP 1 and the APP 2 separately call the function component 3, and at the same time, the function component 3 is also running. An electronic device in which the function component 3 is located may create three instances of the function component 3, which are respectively an instance 1 of the function component 3, an instance 2 of the function component 3, and an instance 3 of the function component 3. The instance 1 of the function component 3 may provide a service for an instance of the calling APP 1, the instance 2 of the function component 3 may provide a service for an instance of the calling APP 2, and the instance 3 of the function component 3 may provide a service for the function component 3. In this way, memory data of the calling APP 1, the calling APP 2, and the function component 3 may be isolated by using an isolation attribute between the instances. This effectively reduces risks such as abuse, confusion, and leakage of the memory data of the function components.

In addition, when a caller calls an instance of a callee, each electronic device may record, into an audit log, a current calling event that the caller calls the instance, and synchronize the calling event to the distributed system, to facilitate subsequent tracing of the calling event, for example, to facilitate cause searching after attack detection, or cause searching for a data security accident or security vulnerability that possibly occurs. The calling event may include information such as occurrence time of the calling event and a calling relationship ID.

In the example in FIG. 7, there are two calling relationships: the APP 1 calls the function component 3, and the APP 2 calls the function component 3. The devices in which the APP 1, the APP 2, and the function component 3 are located may separately record and maintain the calling relationship, and synchronize the calling relationship to the distributed system. In this way, when a problem occurs subsequently, a cause can be easily traced back, and a security risk can be reduced.

The following describes an access control method according to an embodiment of this application.

### Embodiment 1

This embodiment is described by using an example in which both a caller and a callee are deployed on a same electronic device 100.

The electronic device 100 may be an independent electronic device (single-device), or may be an electronic device in a distributed system. The electronic device 100 may also be referred to as a first device.

Various APPs and function components may be installed on the electronic device 100. The example provided in this embodiment does not constitute any limitation on another embodiment of this application.

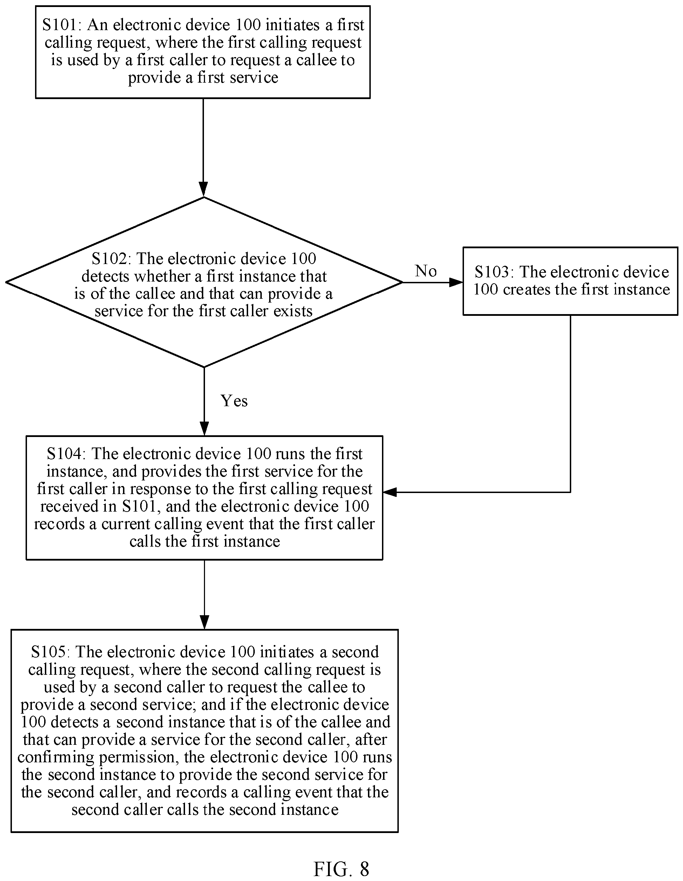

FIG. 8 is a flowchart of an access control method according to an embodiment of this application. The method specifically includes the following steps.

**S101:** The electronic device 100 initiates a first calling request, where the first calling request is used by a first caller to request the callee to provide a first service.

The first calling request may include indication information of the first caller, the callee, and the first service.

A type, content, and the like of the first service are not limited in this embodiment of this application. For example, the first caller may request to access a first resource in the electronic device 100 through the callee. The first resource may include a software resource (for example, a beauty algorithm, a positioning function, and an audio/video codec function) of the electronic device 100, or may include a hardware resource (for example, hardware such as a camera, an audio device, and a display).

Types of the caller and the callee are not limited in this embodiment. The type of the caller may include but is not limited to an APP, a PA, and an FA, and the type of the callee may include but is not limited to the APP, the PA, and the FA. For example, the APP may call a function component PA/FA, the function component PA/FA may also call another function component PA/FA. The APP may alternatively call another APP, and the function component PA/FA may alternatively call the APP. For example, the caller may be a chat APP, and the callee may be a positioning PA that provides a positioning function. When the chat APP needs to acquire location information, the positioning PA needs to provide a positioning function service. In this case, the chat APP may initiate a calling request to the positioning PA.

The electronic device 100 may initiate the first calling request in response to a received user operation, or may initiate the first calling request independently. This is not limited herein. In some embodiments, the electronic device 100 may display a user interface of the caller, and may detect, by using an input device such as a touch sensor, a user touch operation that is entered by a user in the user interface. Then, the electronic device 100 may initiate, in response to the user touch operation, the first calling request of the caller for the callee.

In some embodiments, the callee may be installed in the electronic device 100 in advance. In some other embodiments, after obtaining the first calling request, the electronic device 100 may download and install the callee from a network if detecting that there is no callee, or if located in a distributed system, the electronic device 100 may obtain, download, and install the callee from another electronic device in the distributed system. This is not limited in this embodiment of this application.

In some embodiments, before the electronic device 100 initiates the first calling request, the electronic device 100 needs to confirm that the first caller has permission to access the callee and that the first caller has permission to access the first service.

**S102:** The electronic device 100 detects whether a first instance that is of the callee and that can provide a service for the first caller exists, and performs step S103 if the first instance does not exist, or performs step S104 if the first instance exists.

In this embodiment, the callee may provide different instances for different callers. Therefore, after obtaining the first calling request, the electronic device 100 may first detect whether the first instance of the callee that provides a service for the first caller already exists.

In specific implementation, the electronic device 100 may store a plurality of groups of calling relationships, and the plurality of groups of calling relationships record a plurality of groups of calling events that callers enable instances, to be specific, cases in which different instances provide services for different callers. These calling relationships may be stored in a calling relationship library of the electronic device 100. This helps the electronic device 100 subsequently query whether an instance that provides a service for a caller already exists.

Each group of **calling relationships** may include: information about the caller, instance information of the callee, a calling relationship identifier (identifier, ID), and the like.

In some embodiments, the calling relationship may indicate calling permission. That is, one group of calling relationships may indicate that the caller has permission to call an instance of the callee.

The calling relationship ID may be used to identify different calling relationships, to facilitate identification by the electronic device 100. For example, in the foregoing two groups of calling relationships shown in Table 1, a calling relationship ID of calling the function component 3 by the APP 1 is allocated as 1, and a calling relationship ID of calling the function component 3 by the APP 2 is allocated as 2. Similarly, a unique calling relationship ID is allocated to each of other groups of calling relationships, to facilitate differentiation and query, and may be shared to another electronic device or synchronized to the distributed system.

In some embodiments, when creating an instance of the callee, an electronic device in which the callee is located may record the calling relationship, or when the caller sends a calling request, an electronic device in which the caller is located may also record the calling relationship. In this embodiment of this application, time at which the calling relationship is recorded is not limited, and an event for recording the calling relationship may occur at any time point.

In some embodiments, for a same calling relationship, the device in which the caller is located and the device in which the callee is located may share a same calling relationship ID. The calling relationship ID may be allocated by a subject device, or allocated by an object device, and shared with the peer device.

In some embodiments, after recording a calling relationship, an electronic device may synchronize the calling relationship to the distributed system, and another device in the distributed system may obtain the calling relationship.

The information about the caller may include an application identifier (APP ID) of the caller.

The information about the caller may further include one or more of the following: a user identifier (user ID, UID) of the caller, a developer signature of the caller, an account identifier (account ID) of the subject device in which the caller is located, a device identifier (device ID) of the subject device, an identifier (system ID) of a distributed system in which the caller is located, and the like.

The instance information of the callee may include a process identifier (process ID, PID) of the instance and a UID of the instance. The PID is an identifier of the instance. When the electronic device runs one instance, a unique PID is allocated to the instance. Different instances in the electronic device correspond to different PIDs. When each instance is created, the electronic device also allocates a UID to the instance. UIDs of different instances of a same callee may be different or the same, and are specifically determined based on a status of allocation by the electronic device.

For example, the electronic device 100 may allocate a first PID and a first UID to the first instance, and allocate a second PID and a second UID to a second instance. For another example, in another example, when the callee creates the second instance in response to a second calling request of a second caller, the second calling request indicates that the second UID of the second instance is the same as the first UID of the first instance. In this case, the second UID allocated by the electronic device to the second instance may be the same as the first UID of the first instance.

The instance information of the callee may further include one or more of the following: an application identifier (APP ID) of the callee, a user identifier (user ID, UID) of the callee, a developer signature of the callee, an account identifier (account ID) of an object device of the callee, a device identifier (device ID) of the object device, an identifier (system ID) of a distributed system in which the callee is located, and the like.

The APP ID may be used to identify an APP or a function component.

The developer signature may be used to identify a developer of the APP or the function component.

The UID may be used to identify a user to which the APP, the function component, or the instance belongs. Usually, the electronic device allocates different UIDs to different installed APPs or function components or instances for differentiation. For example, the electronic device may allocate a UID to each of the APPs in a data interval (for example, 10000 to 40000), and allocate a UID to an instance of each of the function components in another data interval (for example, 40001 to 50000).

In some embodiments, the electronic device may allocate a same UID to each APP or function component developed by a same developer. In some other embodiments, the electronic device may alternatively allocate different UIDs to APPs or function components developed by a same developer. In an example, when a first APP is installed, a UID allocated by the electronic device to the first APP is a third UID, and a developer signature of a second APP is the same as that of the first APP. When the second APP is installed, the second APP indicates that the second APP and the first APP use the same UID. The electronic device may also allocate the third UID to the second APP. A same APP or function component may have different UIDs in different electronic devices. A manner or a rule for allocating a UID by the electronic device to different APPs, function components, or instances is not limited in this embodiment of this application.

The account ID may be used to identify a user currently logging in to the electronic device, for example, may be a Huawei account.

The device ID may be used to identify a device. The device ID may be, for example, a name of the device, a serial number of the device, or a media access control (media access control, MAC) address of the device.

The system ID may be used to identify a distributed system in which a current electronic device is located.

In an implementation, process isolation may be performed on instances based on the UID. That is, the UID is used to distinguish between the instances, and different UIDs are allocated to different instances. The instances with the different UIDs provide services for different callers.

In another implementation, process isolation may be performed based on the PID for instances. That is, the PID is used to distinguish between the instances, and different PIDs are allocated to different instances. The instances with the different PIDs provide services for different callers. For example, in some examples, the first instance and the second instance are both different instances of the callee. A same UID is allocated to the first instance and the second instance, but different PIDs are allocated to the first instance and the second instance. The first instance and the second instance respectively provide services for different callers. PID-based process isolation can ensure stricter and more secure data and/or process isolation than UID-based process isolation.

The foregoing solution of performing process isolation based on the UID for the instances and the foregoing solution of performing process isolation based on the PID for the instances are merely examples, and do not constitute any limitation on another embodiment of this application.

In some embodiments, different callers may be distinguished based on one or more pieces of content in the foregoing information about the caller. That is, different callers are distinguished based on one or more of the following: the application identifier (APP ID) of the caller, the UID of the caller, the developer signature of the caller, the account identifier (account ID) of the subject device of the caller, the device identifier (device ID) of the subject device, the identifier (system ID) of the distributed system of the caller, and the like. When one or more of the foregoing items are different, different callers may be distinguished.

In some embodiments, different callers with a same developer signature may indicate to the callee that a same instance is shared. In this way, in a case in which data/process isolation is ensured, data exchange between applications or function components of a same developer may be further facilitated, and memory occupation, CPU consumption, and the like may be reduced.

In addition to the developer signature, different callers may also share a same instance based on other indication information, such as the APP ID, the account ID, the device ID, and the system ID of the caller, which are not listed one by one herein.

In some embodiments, to make the calling relationship more strictly and accurately, information about the caller and information about the callee that are of the calling relationship may include a plurality of items. For example, in an example, the first caller and the callee are located in a distributed system. To verify the calling relationship more strictly, in addition to an APP ID of the first caller and a UID and/or a PID of the first instance of the callee, the calling relationship between the first caller and the callee may further record information such as an ID of a subject device in which the first caller is located and an ID of an object device in which the instance of the callee is located. In this way, an application or a function component that may have the same APP ID and that is on another electronic device in the distributed system may be prevented from incorrectly calling or maliciously calling the first instance. This implements stricter access control.

In this embodiment of this application, the first calling request in S101 may carry information about the first caller, so that the electronic device 100 searches the calling relationship library and determines whether the first instance of the callee corresponding to the first caller exists.

If a determining result in S 102 is no, S 103 is performed; if a determining result in S 102 is yes, S 104 is performed.

**S103**: The electronic device 100 creates the first instance.

If the first instance of the callee that can be called by the first caller is not detected, an instance creation module of the electronic device 100 may create the first instance that exclusively provides a service for the first caller, and perform permission binding.

The first instance is a specific instance of the callee. The first instance and another instance of the callee provide a same function, service, and data, but have different called permissions. For example, if the first instance grants only the first caller calling permission, another application or function component has no permission to call the first instance.

When creating the first instance, the electronic device 100 may record and store a calling relationship and calling permission that are used by the first caller to call the first instance. For a specific description, refer to the related description in S 102.

In some embodiments, the electronic device 100 needs to perform permission authentication. The electronic device 100 may query permission information of the first caller and the callee, determine whether the first caller has permission to call the first instance of the callee, and whether the first caller has permission to access the first service, and may further confirm whether the first instance is an instance that the first caller needs to call, or the like. If confirming that the first caller has the permission to call the first instance and/or access the first service, the electronic device 100 runs the first instance; if confirming that the first caller does not have the permission, the electronic device 100 returns a result indicating that the first caller does not have the calling permission to the first caller. In some embodiments, the calling relationship may indicate whether the first caller has the permission to call the first instance.

In some embodiments, the authentication step of confirming whether the first caller has the permission to call the first instance and/or access the first service may be performed before the first instance is run, before the first instance is created, or before the first calling request is initiated. A condition of time at which the authentication occurs is not limited in this embodiment of this application. The authentication step may occur at any time point before the first instance is run, or even the permission may be queried at any time when the first instance is run.

Once finding that the first caller does not have the permission to call the first instance of the callee, the electronic device 100 returns, to the first caller, a result indicating that the first caller does not have the calling permission, ends a current calling event, and does not continue to perform a subsequent step.

In this step, permission confirmation is performed to prevent an application or a function component that does not have the permission to call the first instance from maliciously calling or incorrectly calling the first instance and accessing a resource of the first instance. This reduces a security risk.

**S104**: The electronic device 100 runs the first instance, and provides the first service for the first caller in response to the first calling request received in S101, and the electronic device 100 records a current calling event that the first caller calls the first instance. After confirming that the first caller has the permission to call the first instance, and confirming that the first instance is indeed an instance that needs to be called by the first caller, the electronic device 100 may run the first instance, allow, in response to the first calling request, the first caller to access a first resource correspondingly provided by the first instance, and return an access result to the first caller.

The first resource provided by the electronic device 100 may include a software resource, a hardware resource, and the like.

When the first caller calls the first instance, the electronic device 100 may record, into an audit log, a current calling event that the first caller calls the first instance, to facilitate subsequent tracing of the calling event, for example, to facilitate cause searching after attack detection, or cause searching for a data security accident or security vulnerability that possibly occurs. The calling event may include information such as occurrence time of the calling event and a calling relationship ID.

After obtaining an instruction for ending calling the callee by the first caller, the electronic device 100 may release a service process of the first instance, and end the first service provided by the first instance for the first caller.

**S105**: The electronic device 100 initiates the second calling request, where the second calling request is used by the second caller to request the callee to provide a second service. If the electronic device 100 detects the second instance that is of the callee and that can provide a service for the second caller, after confirming permission, the electronic device 100 runs the second instance to provide the second service for the second caller, and the electronic device 100 records a current calling event that the second caller calls the second instance. For a specific process, refer to the description that the first caller calls the first instance in steps S101 to S 105. Details are not described herein again.

In this embodiment, the callee may run different corresponding instances based on different callers, and provide different services. For example, the callee may create the first instance and the second instance, where the first instance provides the first service for the first caller, and the second instance provides the second service for the second caller. In this way, permission and data between different instances can be kept isolated, and data security is further improved.

**S106:** The electronic device 100 initiates a third calling request, where the third calling request is used by the first caller to request the callee to provide a third service. If the electronic device 100 detects the first instance that is of the callee and that can provide a service for the first caller, after confirming permission, the electronic device 100 runs the first instance to provide the third service for the first caller, and the electronic device 100 records a current calling event that the first caller calls the first instance. For a specific process, refer to the description that the first caller calls the first instance in steps S101 to S 105. Details are not described herein again.

In this embodiment, when the first caller initiates a different calling request to the callee, to request the callee to provide another service, the electronic device 100 runs a same instance to provide the service. For example, in step S107, the first caller requests the callee to provide the third service. This is different from step S101 in which the first caller requests the callee to provide the first service. However, the callee runs the same first instance for the same first caller, and the first instance may provide the first service or the third service for the first caller in response to the first calling request or the third calling request.

When running an instance, the electronic device 100 generates memory data corresponding to the instance. The memory data is data in a RAM. Running of a plurality of instances by the electronic device 100 respectively corresponds to a plurality of pieces of memory data. The plurality of pieces of memory data are isolated from each other and cannot be accessed by each other.

When running the instance, the electronic device 100 may further generate corresponding application data. The application data is stored in an NVM. The running of the plurality of instances by the electronic device 100 respectively corresponds to a plurality of pieces of application data.

In some embodiments, different callers on a same device may share a same instance. In an example, the electronic device 100 initiates a fourth calling request, where the fourth calling request may carry indication information of a third caller, the callee, and a fourth service, the third caller is installed in the electronic device 100, and the third caller is an application APP or a function component. The electronic device 100 runs the first instance in response to the fourth calling request, where the first instance is further configured to provide the fourth service for the third caller. In this example, both the third caller and the first caller may call the first instance.

According to the method provided in Embodiment 1, the callee respectively runs different instances when providing services for different callers, to ensure permission isolation between the different instances, where the instances cannot access memory data of each other. This avoids a problem that the callee abuses or misuses the memory data of the caller, and ensuring data security.

### Embodiment 2

It may be understood that, the access control method provided in this application may alternatively be implemented between a plurality of electronic devices in a distributed system, and a caller that initiates a calling request and a callee may be deployed on different electronic devices.

After a communications connection is established between the devices in the distributed system 10, each of the devices synchronizes function component information, APP information, and the like of another device in the distributed system. Specifically, each of the devices may synchronize an identifier of a function component and/or an APP installed on the device and device information (for example, a device identifier) of the device to the distributed system, and the identifier and the device information are visible to another device, to facilitate subsequent mutual calling between the devices in the distributed system. Each function component or APP can be called by which caller and can call which other function components or APPs, that is, calling permission and/or called permission, may be preset and recorded on each of the electronic devices, and synchronized in the distributed system.

This embodiment is described by using an example in which the caller and the callee are deployed on different electronic devices in the same distributed system.

In this embodiment, the caller that initiates the calling request is deployed on an electronic device 100, the callee is deployed on an electronic device 200, and the electronic device 100 and the electronic device 200 are located in a same distributed system.

Similarly, types of the caller and the callee are not limited in this embodiment. The type of the caller may include but is not limited to an APP, a PA, and an FA, and the type of the callee may include but is not limited to the APP, the PA, and the FA. For example, the APP may call a function component PA/FA, the function component PA/FA may also call another function component PA/FA. The APP may alternatively call another APP, and the function component PA/FA may alternatively call the APP.

A plurality of terminal devices in a same distributed system may synchronize information such as registration information and permission information of APPs, PAs, and FAs that are respectively deployed by the terminal devices, and a calling relationship between the APP, the PA, and the FA.

The registration information may be used to identify an application or a function component, and may include information such as an identifier (APP ID) of the application or the function component, an identifier (device ID) of an electronic device in which the application or the function component is located, and an account identifier (account ID) of the electronic device in which the application or the function component is located.

The permission information may include information such as calling/access permission and called/accessed permission of the application or the function component.

For a related description of the calling relationship, refer to Embodiment 1. Details are not described herein.

The example provided in this embodiment does not constitute any limitation on another embodiment of this application.

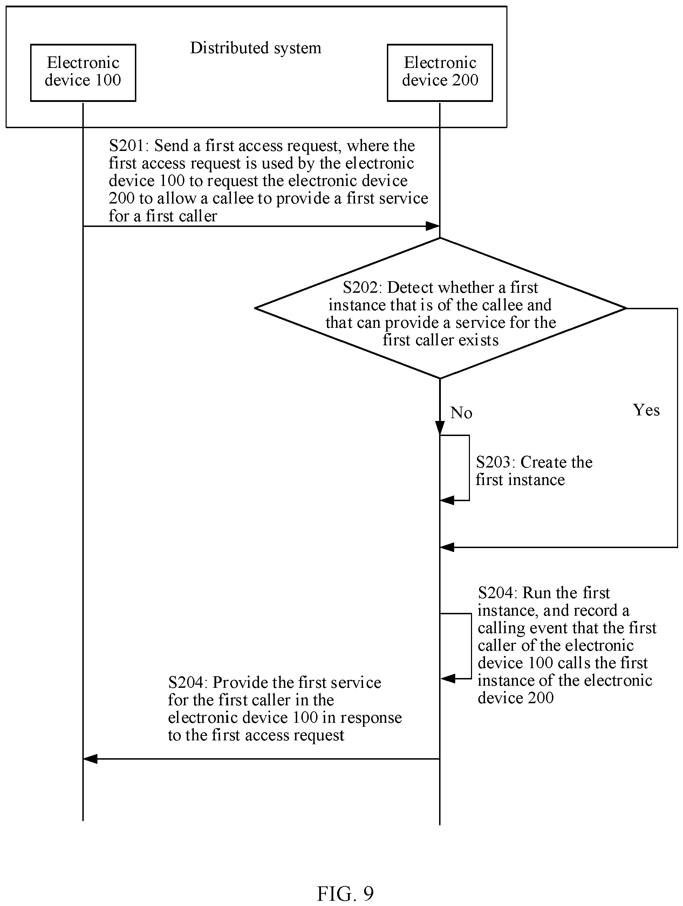

FIG. 9 is a flowchart of an access control method according to an embodiment of this application. The method specifically includes the following steps.

**S201:** An electronic device 100 sends a first access request to an electronic device 200, where the first access request is used by the electronic device 100 to request the electronic device 200 to allow a callee to provide a first service for a first caller.

The first caller is deployed on the electronic device 100, and the callee is deployed on the electronic device 200.

Before the electronic device 100 sends the first access request to the electronic device 200, the electronic device 100 may generate the first calling request, where the first calling request is that the first caller notifies the electronic device 100 that the first caller needs the callee to provide the first service.

A type, content, and the like of the first service are not limited in this embodiment of this application. For example, the first caller of the electronic device 100 requests the callee of the electronic device 200 to provide a first resource. The first resource may include a software resource (for example, a beauty algorithm, a positioning function, and an audio/video codec function) of the electronic device 200, or may include a hardware resource (for example, hardware such as a camera, an audio device, and a display).

The electronic device 100 may obtain, based on the first calling request, an identifier of the electronic device 200 in which the callee is located.

In some embodiments, the first calling request may include an identifier of the electronic device 100, an identifier of the first caller, the identifier of the electronic device 200, an identifier of the callee, and the like. The electronic device 100 may obtain, based on the first calling request, the identifier of the electronic device 200 in which the callee that needs to be called is located.

In some other embodiments, the first calling request does not include the identifier of the electronic device 200 in which the callee is located. In this case, after obtaining the identifier of the callee, the electronic device 100 may query, based on the identifier of the callee, registration information that is of the callee and that is synchronized in the distributed system, to obtain the identifier of the electronic device 200. A manner in which the electronic device 100 obtains the identifier of the electronic device 200 is not limited in this embodiment.

After learning of the identifier of the electronic device 200 in which the callee is located, the electronic device 100 may initiate the first access request to the electronic device 200, where the first access request may carry the ID of the electronic device 100, the ID of the electronic device 200, the ID of the first caller, the ID of the callee, an instruction for requesting the first service, and the like.

The electronic device 100 may initiate the first access request to the electronic device 200 in response to a received user operation, or may initiate the first access request to the electronic device 200 independently. This is not limited herein. In some embodiments, the electronic device 100 may display a user interface of the first caller, and may detect, by using an input device such as a touch sensor, a user operation entered by a user in a user interface. Then, the electronic device 100 may initiate the first access request for the electronic device 200 in response to the user touch operation.

In some embodiments, the callee may be installed in the electronic device 200 in advance. In some other embodiments, after receiving the first access request sent by the electronic device 100, the electronic device 200 may download and install the callee from a network, or may obtain, download, and install the callee from the electronic device 100 or another electronic device in the distributed system. This is not limited in this embodiment of this application.

In some embodiments, before the electronic device 100 sends the first access request to the electronic device 200, the electronic device 100 needs to confirm that the first caller has permission to access the callee, and that the first caller has permission to access the first service.

**S202**: After obtaining the first access request sent by the electronic device 100, the electronic device 200 detects whether a first instance that is of the callee and that can provide a service for the first caller exists, and performs step S203 if the first instance does not exist, or performs step S204 if the first instance exists.

In this embodiment, the callee may provide different instances for different callers. Therefore, after obtaining the first access request, the electronic device 200 may first detect whether the first instance of the callee that provides a service for the first caller of the electronic device 100 already exists.

In specific implementation, the distributed system may store a plurality of groups of calling relationships, and the plurality of groups of calling relationships record a plurality of groups of calling events that callers enable instances, to be specific, cases in which different instances provide services for different callers. These calling relationships may be stored in a calling relationship library in the distributed system, and the calling relationship library may be visible to all electronic devices in the distributed system. This helps the electronic device subsequently query whether an instance that provides a service for a caller already exists.

In some embodiments, the calling relationship may indicate calling permission. That is, one group of calling relationships may indicate that the caller has permission to call an instance of the callee.

For descriptions of the calling relationship, information about the caller, and instance information of the callee, refer to step S 102. Details are not described herein again.

Similarly, in this embodiment, there may be a plurality of implementation solutions for process isolation for instances. The process isolation may be performed based on a UID, may be performed based on a PID, may be performed based on another identifier, or may be performed based on a combination of a plurality of identifiers. This is not limited in this embodiment. For a specific description, refer to step S 102. Details are not described herein again.

Different callers may share a same instance based on other indication information. For example, two callers with a same developer signature share a same instance. Details are not described herein again.

In this embodiment of this application, the first access request may carry information about the first caller, so that the electronic device 200 searches the calling relationship and determines whether the first instance of the callee corresponding to the first caller exists.

If the determining result in S202 is no, S203 is performed; if the determining result in S202 is yes, S204 is performed.

**S203**: The electronic device 200 creates the first instance.

If the first instance of the callee that can be called by the first caller of the electronic device 100 is not detected, an instance creation module of the electronic device 200 may create the first instance that exclusively provides a service for the first caller of the electronic device 100, and perform permission binding.

The first instance is a specific instance of the callee. The first instance and another instance of the callee provide a same function, service, and data, but have different called permissions. For example, if the first instance grants only the first caller of the electronic device 100 calling permission, another application or function component has no permission to call the first instance.

When creating the first instance, the electronic device 200 may record and store a calling relationship and calling permission that are used by the first caller of the electronic device 100 to call the first instance. For a specific description, refer to the related description in S 102.

In some embodiments, when the electronic device 200 in which the callee is located creates an instance, the electronic device 200 may record a first calling relationship, or when the electronic device 100 in which the caller is located sends an access request, the electronic device 100 may also record a first calling relationship. The first calling relationship is a calling relationship between the first caller and the callee. In this embodiment of this application, occurrence time at which the electronic device 100 and the electronic device 200 record the calling relationship is not limited, and an event for recording the calling relationship may occur at any time point.

When each instance is created, the electronic device also allocates a UID and/or a PID to the instance. UIDs of different instances of a same callee may be different or the same, and are specifically determined based on a status of allocation by the electronic device.

For example, the electronic device 200 may allocate a first PID and a first UID to the first instance, and allocate a second PID and a second UID to a second instance. For another example, in another example, when the electronic device 200 creates the second instance in response to a second access request of a second caller of the electronic device 300, the second access request indicates that the second UID of the second instance is the same as the first UID of the first instance. In this case, the second UID allocated by the electronic device 200 to the second instance may be the same as the first UID of the first instance.

In some embodiments, for a same calling relationship, the device in which the caller is located and the device in which the callee is located may share a same calling relationship ID. The calling relationship ID may be allocated by a subject device, or allocated by an object device, and shared with the peer device.

In some embodiments, after recording a calling relationship, an electronic device may synchronize the calling relationship to the distributed system, and another device in the distributed system may obtain the calling relationship.

In some embodiments, the device in which the caller is located and the device in which the callee is located may separately record a same calling relationship, and share a same calling relationship ID. The calling relationship recorded by the device in which the caller is located may be different from the calling relationship recorded by the device in which the callee is located.

For example, in an example, the electronic device 100 may record the first calling relationship after sending the first access request to the electronic device 200. The first calling relationship recorded by the electronic device 100 includes information about the first caller, information about the callee, and an identifier of the first calling relationship. The information about the first caller includes at least an application identifier of the first caller, and the information about the callee includes at least an application identifier of the callee. On this basis, the information about the first caller may further include one or more of the following: a UID of the first caller, a developer signature of the first caller, an account identifier of the electronic device 100 in which the first caller is located, an identifier of the electronic device 100, an identifier of a communications system in which the first caller is located, and the like. The information about the callee may further include one or more of the following: a PID of the first instance, a UID of the first instance, a UID of the callee, a developer signature of the callee, an account identifier of the electronic device 200 in which the callee is located, an identifier of the electronic device 200, an identifier of a communications system in which the callee is located, and the like.

In addition, the electronic device 200 may record the first calling relationship after creating the first instance. The first calling relationship recorded by the electronic device 200 includes the information about the first caller, information about the first instance, and the identifier of the first calling relationship. The information about the first caller includes at least the application identifier of the first caller, and the information about the callee includes at least the application identifier of the callee, the PID of the first instance, and/or the UID of the first instance. On this basis, the information about the first caller may further include one or more of the following: the UID of the first caller, the developer signature of the first caller, the account identifier of the electronic device 100 in which the first caller is located, the identifier of the electronic device 100, the identifier of the communications system in which the first caller is located, and the like. The information about the first instance may further include one or more of the following: the UID of the callee, the developer signature of the callee, the account identifier of the electronic device 200 in which the callee is located, the identifier of the electronic device 200, the identifier of the communications system in which the callee is located, and the like.

The first calling relationship recorded by the electronic device 100 and the first calling relationship recorded by the electronic device 200 are actually a same calling relationship, and share a same calling relationship ID. However, recorded content is different. The calling relationship ID may be allocated by the electronic device 100, or may be allocated by the electronic device 200 and shared with a peer device. For example, in the first calling relationship, for instance information of the callee, the electronic device 100 may record only the application identifier of the callee, but does not need to record the UID and/or the PID of the first instance. However, as a device in which the first instance is located, the electronic device 200 may record not only the application identifier of the callee, but also the UID and/or the PID of the first instance.

In some embodiments, the electronic device 200 needs to perform permission authentication. The electronic device 200 may query permission information of the first caller and the callee, determine whether the first caller of the electronic device 100 has permission to call the first instance of the callee, and whether the first caller has permission to access the first service, and may further confirm whether the first instance is an instance that the first caller needs to call, or the like. If confirming that the first caller of the electronic device 100 has the permission to call the first instance and/or access the first service, the electronic device 200 runs the first instance, and allows the electronic device 100 to access a resource correspondingly provided by the electronic device 200; if confirming that the first caller of the electronic device 100 does not have the permission, the electronic device 200 returns a result indicating that the first caller does not have the calling permission to the first caller. In some embodiments, the calling relationship may indicate whether the first caller of the electronic device 100 has the permission to call the first instance of the electronic device 200.

In some embodiments, the authentication step of confirming, by the electronic device 200, whether the first caller has the permission to call the first instance and/or access the first service may be performed before the first instance is run, before the first instance is created, or after the first access request is received. A condition of time at which the authentication occurs is not limited in this embodiment. The authentication step may occur at any time point before the first instance is run, or even the permission may be queried at any time when the first instance is run.

Once finding that the first caller of the electronic device 100 does not have the permission to call the first instance, the electronic device 200 may return, to the electronic device 100, a result indicating that the first caller does not have the calling permission, end a current calling event, and not continue to perform a subsequent step.

Similarly, in some embodiments, the electronic device 100 also needs to perform permission authentication. For example, before sending the first access request, the electronic device 100 may query permission information of the first caller, to determine whether the first caller of the electronic device 100 has permission to call the callee of the electronic device 200 and whether the first caller has permission to access the first service. The electronic device 100 sends the first access request to the electronic device 200 if the first caller has the permission. The electronic device 100 terminates sending of the first calling request if the first caller does not have the permission. A condition of time at which the authentication occurs is not limited in this embodiment. The authentication step may occur not only before the first access request is sent, but also after the first access request is sent, or at another time point.

In this step, permission confirmation is performed to prevent an application or a function component that does not have the permission to call the first instance from maliciously calling or incorrectly calling the first instance and accessing a resource of the first instance. This reduces a security risk.

**S204:** The electronic device 200 runs the first instance, provides the first service for the first caller in the electronic device 100 in response to the first access request received in S201, and records a current calling event that the first caller of the electronic device 100 calls the first instance of the electronic device 200.

After confirming that the first caller has the permission to call the first instance, and confirming that the first instance is indeed an instance that needs to be called by the first caller, the electronic device 200 may run the first instance, and allow, in response to the first access request, the electronic device 100 to access the first resource correspondingly provided by the electronic device 200.

The first resource provided by the electronic device 200 may include a software resource, a hardware resource, and the like.

In some embodiments, the electronic device 200 runs the first instance, may generate a first result based on the first access request, and then return the first result to the electronic device 100. After receiving the first result, the electronic device 100 runs the first caller to process the first result.

When the first caller calls the first instance, the electronic device 200, the electronic device 100, or another device in the distributed system may record, into an audit log, a current calling event that the first caller of the electronic device 100 calls the first instance of the electronic device 200, and synchronize the calling event to the distributed system, to facilitate subsequent tracing of the calling event, for example, to facilitate cause searching after attack detection, or cause searching for a data security accident or security vulnerability that possibly occurs. The calling event may include information such as occurrence time of the calling event and a calling relationship ID.

When the electronic device 100 generates an instruction for ending calling the callee by the first caller, the electronic device 100 may send a calling ending request to the electronic device 200, and then the electronic device 200 releases a service process of the first instance, and ends the first service provided by the first instance for the first caller.

**S205:** The electronic device 300 initiates the second access request to the electronic device 200, where the second access request is used by the electronic device 300 to request the electronic device 200 to allow the callee to provide a second service for the second caller. The second caller is deployed on the electronic device 300, and the callee is deployed on the electronic device 200. If the electronic device 200 detects the second instance that is of the callee and that can provide a service for the second caller, after confirming permission, the electronic device 200 runs the second instance to provide the second service for the second caller of the electronic device 300, and records a current calling event that the second caller of the electronic device 300 calls the second instance of the electronic device 200. For a specific process, refer to the description that the first caller of the electronic device 100 calls the first instance of the electronic device 200 in steps S201 to S205. Details are not described herein again.

In some other embodiments, the second caller may alternatively be deployed on the electronic device 100, or deployed on the electronic device 200.

In this embodiment, the callee may run different corresponding instances based on different callers, and provide different services. For example, the callee may create the first instance and the second instance, where the first instance provides the first service for the first caller, and the second instance provides the second service for the second caller. In this way, permission and data between different instances can be kept isolated, and data security is further improved.

**S206**: The electronic device 100 initiates a third access request to the electronic device 200, where the third access request is used by the electronic device 100 to request the electronic device 200 to allow the callee to provide a third service for the first caller. If the electronic device 200 detects the first instance that is of the callee and that can provide a service for the first caller, after confirming permission, the electronic device 200 runs the first instance to provide the third service for the first caller of the electronic device 100, and records a current calling event that the first caller of the electronic device 100 calls the first instance of the electronic device 200. For a specific process, refer to the description that the first caller of the electronic device 100 calls the first instance of the electronic device 200 in steps S201 to S205. Details are not described herein again.

In this embodiment, when the first caller of the electronic device 100 initiates a different calling request to the callee of the electronic device 200, to request the callee to provide another service, the electronic device 200 runs a same instance to provide the service. For example, in step S207, the first caller of the electronic device 100 requests the callee of the electronic device 200 to provide the third service. This is different from step S201 in which the first caller of the electronic device 100 requests the callee of the electronic device 200 to provide the first service. However, the callee runs the same first instance for the same first caller, and the first instance may provide the first service or the third service for the first caller in response to the first calling request or the third calling request.

When running an instance, the electronic device 200 generates memory data corresponding to the instance. The memory data is data in a RAM. Running of a plurality of instances by the electronic device 200 respectively corresponds to a plurality of pieces of memory data. The plurality of pieces of memory data are isolated from each other and cannot be accessed by each other.

When running the instance, the electronic device 200 may further generate corresponding application data. The application data is stored in an NVM. The running of the plurality of instances by the electronic device 200 respectively corresponds to a plurality of pieces of application data.

The electronic device 100 may also be referred to as a first device, the electronic device 200 may also be referred to as a second device, and the electronic device 300 may also be referred to as a third device. The first access request may also be referred to as a first request, the second access request may also be referred to as a second request, and the third access request may also be referred to as a third request.

In some embodiments, different callers on a same device may share a same instance. In an example, the first device sends a fourth request to the second device, where the fourth request may carry indication information of a third caller, a callee, and a fourth service, the third caller is installed in the first device, and the third caller is an application APP or a function component. The second device runs the first instance in response to the fourth request, where the first instance is further configured to provide the fourth service for the third caller. In this example, both the third caller and the first caller on the first device may call the first instance.

In some embodiments, a same caller on different devices may share a same instance. In an example, the fourth device initiates a fifth request to the second device, where the fifth request carries indication information of the first caller, the callee, and a fifth service, and the first caller is installed in the fourth device. The second device runs the first instance in response to the fifth request, where the first instance is further configured to provide the fifth service for the first caller in the fourth device. In this example, both the first caller on the first device and the first caller on the fourth device may call the first instance.

In some embodiments, a same caller on different devices may call different instances. In an example, the first caller and the second caller are the same caller. In this example, the first caller of the first device may call the first instance, and the first caller of the second device may call the second instance, where the first instance is different from the second instance.

In some embodiments, different callers on a same device may call different instances. In an example, the first device and the third device are the same device. In this example, the first caller of the first device may call the first instance, and the second caller of the first device may call the second instance, where the first instance is different from the second instance.

According to the method provided in Embodiment 2, the callees deployed on different electronic devices respectively run different instances when providing services for different callers, to ensure permission isolation between the different instances, where the instances cannot access memory data of each other. This avoids a problem that the callee abuses or misuses the memory data of the caller, and ensuring data security.

The implementations described in the foregoing embodiments are merely examples for description, and do not constitute any limitation on another embodiment of this application. A specific internal implementation may vary according to different types of electronic devices, different operating systems, used programs, and different called interfaces. This is not limited in the embodiments of this application, provided that the feature functions described in the embodiments of this application can be implemented.

According to the context, the term "when" used in the foregoing embodiments may be interpreted as a meaning of "if", "after", "in response to determining", or "in response to detecting". Similarly, according to the context, the phrase "when it is determined that" or "if (a stated condition or event) is detected" may be interpreted as a meaning of "if it is determined that" or "in response to determining" or "when (a stated condition or event) is detected" or "in response to detecting (a stated condition or event)".

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive), or the like.

Persons of ordinary skill in the art may understand that all or some of the processes of the methods in the foregoing embodiments may be implemented by a computer program instructing related hardware. The program may be stored in a computer-readable storage medium. When the program runs, the processes of the methods in the foregoing embodiments are performed. The foregoing storage medium includes any medium that can store program code, such as a ROM, a random access memory RAM, a magnetic disk, or an optical disc.

The foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof. However, these modifications or replacements do not cause the essence of the corresponding technical solutions to depart from the scope of the technical solutions of the embodiments of this application.

## Claims

1. An access control method, wherein the method is applied to a communications system, and the communications system comprises a first device, a second device, and a third device, wherein a first caller is installed in the first device, a callee is installed in the second device, and a second caller is installed in the third device; and the first caller, the callee, and the second caller each are an application or a function component, the application is a program entity implementing a plurality of functions, and the function component is a program entity implementing a single function; and
the method comprises:
sending, by the first device, a first request to the second device, wherein the first request carries indication information of the first caller, the callee, and a first service;
running, by the second device, a first instance in response to the first request, wherein the first instance is an instance of the callee, and the first instance is configured to provide the first service for the first caller;
sending, by the third device, a second request to the second device, wherein the second request carries indication information of the second caller, the callee, and a second service; and
running, by the second device, a second instance in response to the second request, wherein the second instance is an instance of the callee, the second instance is configured to provide the second service for the second caller, and the second instance is different from the first instance.

2. The method according to claim 1, wherein the method further comprises:
sending, by the first device, a third request to the second device, wherein the third request carries indication information of the first caller, the callee, and a third service; and
running, by the second device, the first instance in response to the third request, wherein the first instance is further configured to provide the third service for the first caller.

3. The method according to claim 1 or 2, wherein the method further comprises:
sending, by the first device, a fourth request to the second device, wherein the fourth request carries indication information of a third caller, the callee, and a fourth service, the third caller is installed in the first device, and the third caller is an application or a function component; and
running, by the second device, the first instance in response to the fourth request, wherein the first instance is further configured to provide the fourth service for the third caller.

4. The method according to any one of claims 1 to 3, wherein the method further comprises:
sending, by a fourth device, a fifth request to the second device, wherein the fifth request carries indication information of the first caller, the callee, and a fifth service, and the first caller is installed in the fourth device; and
running, by the second device, the first instance in response to the fifth request, wherein the first instance is further configured to provide the fifth service for the first caller in the fourth device.

5. The method according to any one of claims 1 to 4, wherein the first caller is the same as the second caller.

6. The method according to any one of claims 1 to 5, wherein the first device is the same as the third device.

7. The method according to any one of claims 1 to 6, wherein before the running, by the second device, a first instance, the method further comprises:
detecting, by the second device, whether the first instance exists, and if the first instance does not exist, creating, by the second device, the first instance.

8. The method according to any one of claims 1 to 7, wherein the method further comprises:
allocating, by the second device, a first process identifier PID to the first instance, and allocating a second PID to the second instance; or
allocating, by the second device, a first user identifier UID to the first instance, and allocating a second UID to the second instance.

9. The method according to any one of claims 1 to 8, wherein the method further comprises:
recording, by the second device, a first calling relationship, wherein the first calling relationship comprises information about the first caller, information about the first instance, and an identifier of the first calling relationship;
the information about the first caller comprises an application identifier of the first caller; and
the information about the first instance comprises an application identifier of the callee, the first PID, and the first UID.

10. The method according to claim 9, wherein
the information about the first caller further comprises one or more of the following: a user identifier UID of the first caller, a developer signature of the first caller, an account identifier of the first device in which the first caller is located, an identifier of the first device, and an identifier of a communications system in which the first caller is located; and
the information about the first instance further comprises one or more of the following: a user identifier UID of the callee, a developer signature of the callee, an account identifier of the second device in which the callee is located, an identifier of the second device, and an identifier of a communications system in which the callee is located.

11. The method according to any one of claims 1 to 8, wherein the method further comprises: recording, by the first device, a first calling relationship, wherein the first calling relationship comprises information about the first caller, information about the callee, and an identifier of the first calling relationship;
the information about the first caller comprises an application identifier of the first caller; and
the information about the callee comprises an application identifier of the callee.

12. The method according to claim 11, wherein
the information about the first caller further comprises one or more of the following: a user identifier UID of the first caller, a developer signature of the first caller, an account identifier of the first device in which the first caller is located, an identifier of the first device, and an identifier of a communications system in which the first caller is located; and
the information about the callee further comprises one or more of the following: the first PID, the first UID, a user identifier UID of the callee, a developer signature of the callee, an account identifier of the second device in which the callee is located, an identifier of the second device, and an identifier of a communications system in which the callee is located.

13. The method according to any one of claims 1 to 12, wherein after the running, by the second device, a first instance, the method further comprises:
generating, by the second device, a first result;
returning, by the second device, the first result to the first device; and
running, by the first device, the first caller to process the first result.

14. The method according to any one of claims 1 to 13, wherein the method further comprises:
confirming, by the second device, that the first caller has permission to access the callee.

15. The method according to any one of claims 1 to 14, wherein the method further comprises:
confirming, by the second device, that the first caller has permission to access the first service.

16. The method according to any one of claims 1 to 15, wherein the method further comprises:
confirming, by the first device, that the first caller has permission to access the callee.

17. The method according to any one of claims 1 to 16, wherein the method further comprises:
confirming, by the first device, that the first caller has permission to access the first service.

18. An access control method, wherein the method comprises:
receiving, by a second device, a first request of a first device, wherein a first caller is installed in the first device, a callee is installed in the second device, and the first request carries indication information of the first caller, the callee, and a first service;
running, by the second device, a first instance in response to the first request, wherein the first instance is an instance of the callee, and the first instance is configured to provide the first service for the first caller;
receiving, by the second device, a second request of a third device, wherein a second caller is installed in the third device, and the second request carries indication information of the second caller, the callee, and a second service; and
running, by the second device, a second instance in response to the second request, wherein the second instance is an instance of the callee, the second instance is configured to provide the second service for the second caller, and the second instance is different from the first instance, wherein
the first caller, the callee, and the second caller each are an application or a function component, the application is a program entity implementing a plurality of functions, and the function component is a program entity implementing a single function.

19. The method according to claim 18, wherein the method further comprises:
receiving, by the second device, a third request of the first device, wherein the third request carries indication information of the first caller, the callee, and a third service; and
running, by the second device, the first instance in response to the third request, wherein the first instance is further configured to provide the third service for the first caller.

20. The method according to claim 18 or 19, wherein the method further comprises:
receiving, by the second device, a fourth request of the first device, wherein the fourth request carries indication information of a third caller, the callee, and a fourth service, the third caller is installed in the first device, and the third caller is an application or a function component; and
running, by the second device, the first instance in response to the fourth request, wherein the first instance is further configured to provide the fourth service for the third caller.

21. The method according to any one of claims 18 to 20, wherein the method further comprises:
receiving, by the second device, a fifth request of a fourth device, wherein the fifth request carries indication information of the first caller, the callee, and a fifth service, and the first caller is installed in the fourth device; and
running, by the second device, the first instance in response to the fifth request, wherein the first instance is further configured to provide the fifth service for the first caller in the fourth device.

22. The method according to any one of claims 18 to 21, wherein the first caller is the same as the second caller.

23. The method according to any one of claims 18 to 22, wherein the first device is the same as the third device.

24. The method according to any one of claims 18 to 23, wherein before the running, by the second device, a first instance, the method further comprises:
detecting, by the second device, whether the first instance exists, and if the first instance does not exist, creating, by the second device, the first instance.

25. The method according to any one of claims 18 to 24, wherein the method further comprises:
allocating, by the second device, a first process identifier PID to the first instance, and allocating a second PID to the second instance; or
allocating, by the second device, a first user identifier UID to the first instance, and allocating a second UID to the second instance.

26. The method according to any one of claims 18 to 25, wherein the method further comprises:
recording, by the second device, a first calling relationship, wherein the first calling relationship comprises information about the first caller, information about the first instance, and an identifier of the first calling relationship, wherein
the information about the first caller comprises an application identifier of the first caller; and
the information about the first instance comprises an application identifier of the callee, the first PID, and the first UID.

27. The method according to claim 26, wherein
the information about the first caller further comprises one or more of the following: a user identifier UID of the first caller, a developer signature of the first caller, an account identifier of the first device in which the first caller is located, an identifier of the first device, and an identifier of a communications system in which the first caller is located; and
the information about the first instance further comprises one or more of the following: a user identifier UID of the callee, a developer signature of the callee, an account identifier of the second device in which the callee is located, an identifier of the second device, and an identifier of a communications system in which the callee is located.

28. The method according to any one of claims 18 to 27, wherein after the running, by the second device, a first instance, the method further comprises:
generating, by the second device, a first result; and
returning, by the second device, the first result to the first device.

29. The method according to any one of claims 18 to 28, wherein the method further comprises:
confirming, by the second device, that the first caller has permission to access the callee.

30. The method according to any one of claims 18 to 29, wherein the method further comprises:
confirming, by the second device, that the first caller has permission to access the first service.

31. An electronic device, wherein the electronic device comprises a communications apparatus, a memory, a processor coupled to the memory, a plurality of applications, and one or more programs, wherein the memory stores computer-executable instructions; and when the processor executes the instructions, the electronic device is enabled to implement the method according to any one of claims 18 to 30.

32. A communications system, wherein the communications system comprises a first device, a second device, and a third device, and the second device performs the method according to any one of claims 18 to 30.

33. A computer-readable storage medium, comprising instructions, wherein when the instructions are run on an electronic device, the electronic device is enabled to perform the method according to any one of claims 18 to 30.

34. A computer program product comprising instructions, wherein when the computer program product runs on an electronic device, the electronic device is enabled to perform the method according to any one of claims 18 to 30.
